# EUROPEAN PATENT APPLICATION

(11) **EP 4 053 867 A1**
(43) Date of publication of application: **07.09.2022**
(21) Application number: 20881391.5
(22) Date of filing: 14.10.2020
(51) Int. Cl.: H01G 11/52, H01G 11/84, H01M 50/409

(54) **FUNCTIONAL LAYER FOR ELECTROCHEMICAL ELEMENTS AND METHOD FOR PRODUCING SAME, SEPARATOR WITH FUNCTIONAL LAYER FOR ELECTROCHEMICAL ELEMENTS AND METHOD FOR PRODUCING SAME, AND ELECTROCHEMICAL ELEMENT AND METHOD FOR PRODUCING SAME**

(30) Priority: 31.10.2019 JP 2019199408
(71) Applicant: Zeon Corporation, Tokyo 100-8246 (JP)
(72) Inventor: TAGUCHI, Hiroyuki, Tokyo 100-8246 (JP)
(74) Representative: Parchmann, Stefanie
(86) International application number: PCT/JP2020/038827
(87) International publication number: WO 2021/085144

(57) **Abstract**

Disclosed is a functional layer for an electrochemical device that comprises inorganic particles and a particulate polymer, wherein the functional layer comprises a particle-detached portion, in a plan view of a surface of the functional layer, a ratio of an area of the particle-detached portion in a total area of the particulate polymer and the particle-detached portion is 0.1% or more and 40.0% or less, and a volume-average particle diameter of the particulate polymer is larger than a thickness of an inorganic particle layer comprising the inorganic particles.

## Description

### TECHNICAL FIELD

The present disclosure relates to a functional layer for an electrochemical device and a method for manufacturing the same; a separator with a functional layer for an electrochemical device and a method for manufacturing the same; and an electrochemical device and a method for manufacturing the same.

### BACKGROUND

Electrochemical devices such as lithium-ion secondary batteries and electric double-layer capacitors have characteristics such as compact size, light weight, high energy-density, and the ability to be repeatedly charged and discharged, and are used in a wide variety of applications.

A secondary battery generally includes battery members such as a positive electrode, a negative electrode, and a separator that isolates the positive electrode the negative electrode from each other to prevent short-circuiting between the positive and negative electrodes.

In recent years, for the purpose of improving the performance of the lithium-ion secondary battery, further improvements of the separator has been studied.

Specifically, for example, PTL 1 proposes a separator in which a heat-resistant layer containing non-conductive particles and binder is formed on a separator substrate and an adhesive layer containing a predetermined particulate polymer is further provided on the heat-resistant layer. PTL 1 reports that the use of a separator having an adhesive layer provided on a heat-resistant layer allows the separator to be well bonded to the electrodes to improve battery characteristics of the secondary battery.

### CITATION LIST

### Patent Literature

PTL 1: WO2013/151144

### SUMMARY

### (Technical Problem)

However, the manufacturing process of the aforementioned conventional separator that includes a heat-resistant layer and an adhesive layer is complicated because it is necessary to sequentially perform formation of a heat-resistant layer on a separator substrate and formation of an adhesive layer on the heat-resistant layer.

One possible way for addressing such a problem is to simplify the manufacturing process of a separator for increased productivity by forming, instead of individually forming on a separator substrate a heat-resistant layer and an adhesive layer, a single layer that simultaneously exerts heat resistance and adhesion (hereinafter, such a layer is referred to as a "functional layer").

The inventor then focused on the fact that the use of a composition containing a component that contributes to heat resistance and a component that contributes to adhesion may allow the resulting functional layer to simultaneously exert heat resistance and adhesion. The inventor established, however, that a functional layer formed using a composition obtained by simply mixing a component that contributes to heat resistance and a component that contributes to adhesion provides insufficient adhesion between members during the manufacturing process of an electrochemical device (hereinafter, such adhesion is also referred to as "process adhesion"). In addition, the inventor established that there is room for improving cycle characteristics of the electrochemical device manufactured using such a functional layer.

It would therefore be helpful to provide a technique relating to a functional layer for an electrochemical device that has good process adhesion as well as allows an electrochemical device to exert good cycle characteristics.

### (Solution to Problem)

The inventor conducted diligent investigation to achieve the object set forth above. The inventor has established that a functional layer that comprises inorganic particles and a particulate polymer, wherein the functional layer has a particle-detached portion, the ratio of the area of the particle-detached portion in the total area of the particulate polymer and the particle-detached portion in a plan view falls within a predetermined range, and the volume-average particle diameter of the particulate polymer is larger than the thickness of an inorganic particle layer comprising the inorganic particles, has good process adhesion as well as allows an electrochemical device to exert good cycle characteristics. The inventor thus completed the present disclosure.

Namely, the present disclosure aims at advantageously solving the aforementioned problem, and the disclosed functional layer for an electrochemical device comprises inorganic particles and a particulate polymer, wherein the functional layer has a particle-detached portion, a ratio of an area of the particle-detached portion in a total area of the particulate polymer and the particle-detached portion in a plan view of a surface of the functional layer is 0.1% or more and 40.0% or less and a volume-average particle diameter of the particulate polymer is larger than a thickness of an inorganic particle layer comprising the inorganic particles. A functional layer for an electrochemical device (hereinafter also simply referred to as a "functional layer") that comprises inorganic particles and a particulate polymer, wherein the functional layer has a particle-detached portion, the ratio of the area of the particle-detached portion in the total area of the particulate polymer and the particle-detached portion in a plan view falls within a predetermined range, and the volume-average particle diameter of the particulate polymer is larger than the thickness of an inorganic particle layer comprising the inorganic particles, has good process adhesion as well as allows an electrochemical device to exert good cycle characteristics.

Herein, "the ratio of the area of the particle-detached portion in the total area of the particulate polymer and the particle-detached portion in a plan view of a surface of the functional layer," "the volume-average particle diameter" of the particulate polymer in the functional layer, and the "thickness of the inorganic particle layer" can be measured by the methods described in Examples.

It is preferred in the disclosed functional layer that the particulate polymer have a volume-average particle diameter of 1.0 µm or more and 10.0 µm or less. When the volume-average particle diameter of the particulate polymer falls within the above predetermined range, the process adhesion of the functional layer can be further increased. In addition, when the volume-average particle diameter of the particulate polymer falls within the aforementioned predetermined range, the heat resistance of the functional layer can be improved and also the electrolyte solution injection property when manufacturing an electrochemical device using a battery member having the functional layer (hereinafter, such property is also referred to as "electrolyte solution injection property of electrochemical device") can be improved.

It is also preferred in the disclosed functional layer that the particulate polymer have a particle size distribution of 1.5 or less. When the particle size distribution of the particulate polymer is equal to or lower than the above predetermined value, the storage characteristics of the electrochemical device can be increased.

Herein, the "particle size distribution" of the particulate polymer in the functional layer can be measured by the method described in Examples.

It is also preferred in the disclosed functional layer that the ratio of the volume-average particle diameter of the particulate polymer to the thickness of the inorganic particle layer (volume-average particle diameter of the particulate polymer/thickness of the inorganic particle layer) be 1.1 or more and 10.0 or less. When the ratio of the volume-average particle diameter of the particulate polymer to the thickness of the inorganic particle layer (volume-average particle diameter of the particulate polymer/ thickness of the inorganic particle layer) falls within the above predetermined range, the process adhesion of the functional layer can be further increased. Further, when the ratio of the volume-average particle diameter of the particulate polymer to the thickness of the inorganic particle layer (volume-average particle diameter of the particulate polymer/thickness of the inorganic particle layer) falls within the above predetermined range, the heat resistance of the functional layer can be improved and also the electrolyte solution injection property of the electrochemical device can be improved.

It is also preferred in the disclosed functional layer that the particulate polymer satisfy the following condition 1) or 2):
1) the particulate polymer has a glass transition temperature of 10°C or higher and 90°C or lower;
2) the particulate polymer has a melting point of 50°C or higher.

When the glass transition temperature of the particulate polymer falls within the above predetermined range, blocking of the functional layer can be prevented while ensuring good adhesion of the functional layer. Further, when the melting point of the particulate polymer is 50°C or higher, even when the particulate polymer comprises a crystalline high-molecular weight polymer, it is possible to ensure good adhesion of the functional layer.

Herein, "the glass transition temperature" and "melting point" of the particulate polymer can be measured by the methods described Examples.

It is also preferred in the disclosed functional layer that the ratio of the total area of the particulate polymer and the particle-detached portion per unit area of the functional layer in a plan view of a surface of the functional layer is 10% or less. When the ratio of the total area of the particulate polymer and the particle-detached portion per unit area of the functional layer in a plan view of a surface of the functional layer equals to or lower than the above predetermined value, the heat resistance of the functional layer can be improved

Herein, "the ratio of the total area of the particulate polymer and the particle-detached portion per unit area of the functional layer in a plan view of a surface of the functional layer" can be measured by the method described in Examples.

It is preferred in the disclosed functional layer that the particulate polymer comprise an aromatic vinyl monomer unit. When the particulate polymer comprises an aromatic vinyl monomer unit, the elasticity of the particulate polymer is improved, so that the strength of the functional layer can be increased.

In the disclosed functional layer, the particulate polymer may comprise a fluorine atom-containing monomer unit.

The present disclosure aims at advantageously solving the problem set forth above, and the disclosed separator with a functional layer for an electrochemical device comprises any of the aforementioned functional layers on a separator substrate. It is thus possible to provide a separator having a functional layer, which has good process adhesion as well as allows an electrochemical device to exert good cycle characteristics.

The present disclosure aims at advantageously solving the problem set forth above, and the disclosed electrochemical device comprises the aforementioned separator with a functional layer for an electrochemical device. Including the disclosed separator with a functional layer for an electrochemical device makes it possible to provide an electrochemical device capable of exerting good cycle characteristics.

The present disclosure aims at advantageously solving the problem set forth above, and the disclosed method for manufacturing a functional layer for an electrochemical device comprises: forming on a substrate a coating of a composition for an electrochemical device functional layer comprising inorganic particles and a particulate polymer; drying the coating to form a pre-functional layer; and applying a tension of 1 N/mm² or more and 20 N/mm² or less to the substrate on which the pre-functional layer is formed. According to the disclosed method for manufacturing a functional layer for an electrochemical device, it is possible to manufacture a functional layer for an electrochemical device that has good process adhesion as well as allows an electrochemical device to exert good cycle characteristics.

It is preferred in the disclosed method for manufacturing a functional layer for an electrochemical device that the particulate polymer have a volume-average particle diameter of 1.0 µm or more and 10.0 µm or less. When the volume-average particle diameter of the particulate polymer falls within the above predetermined range, it is possible to further increase the process adhesion of the functional layer to be manufactured and to further improve the cycle characteristics of the electrochemical device. Further, when the volume-average particle diameter of the particulate polymer falls within the above predetermined range, it is possible to improve the heat resistance of the functional layer to be manufactured and to improve the electrolyte solution injection property of the electrochemical device.

Herein, "the volume-average particle diameter" of the particulate polymer in the composition for an electrochemical device functional layer (hereinafter also referred to as a "functional layer composition") can be measured by the method described in Examples.

It is also preferred in the disclosed method for manufacturing a functional layer for an electrochemical device that the particulate polymer have a particle size distribution of 1.5 or less. When the particle size distribution of the particulate polymer is equal to or lower than the above predetermined value, it is possible to further increase the process adhesion of the functional layer to be manufactured and to further improve the cycle characteristics of the electrochemical device. Further, when the particle size distribution of the particulate polymer is equal to or lower than the above predetermined value, the electrolyte solution injection property of the electrochemical device can be improved. Further, when the particle size distribution of the particulate polymer is equal to or lower than the above predetermined value, the storage characteristics of the electrochemical device can be improved.

Herein, "the particle size distribution" of the particulate polymer in the functional layer composition can be measured by the method described in Examples.

It is also preferred in the disclosed method for manufacturing a functional layer for an electrochemical device that the particulate polymer satisfy the following condition 3) or 4):
3) the particulate polymer has a glass transition temperature of 10°C or higher and 90°C or lower;
4) the particulate polymer has a melting point of 50°C or higher.

When the glass transition temperature of the particulate polymer falls within the above predetermined range, blocking of the functional layer can be prevented while ensuring good adhesion of the functional layer to be manufactured. Further, when the melting point of the particulate polymer is 50°C or higher, it is possible to ensure good adhesion of the functional layer to be manufactured even when the particulate polymer comprises a crystalline high-molecular weight polymer.

It is preferred in the disclosed method for manufacturing a functional layer for an electrochemical device that the volume ratio of the inorganic particles to the particulate polymer (inorganic particles/particulate polymer) in the functional layer composition be 55/45 or more and 95/5 or less. When the volume ratio of the inorganic particles to the particulate polymer (inorganic particles/particulate polymer) in the functional layer composition falls within the above predetermined range, it is possible to maintain a good balance between heat resistance and process adhesion of the functional layer to be manufactured.

It is also preferred in the disclosed method for manufacturing a functional layer for an electrochemical device that the particulate polymer comprise an aromatic vinyl monomer unit. When the particulate polymer comprises an aromatic vinyl monomer unit, the elasticity of the particulate polymer is improved, so that the strength of the functional layer to be manufactured can be increased.

In the disclosed method for manufacturing a functional layer for an electrochemical device, the particulate polymer may comprise a fluorine atom-containing monomer unit.

The present disclosure aims at advantageously solving the problem set forth above, and the disclosed method for manufacturing a separator with a functional layer for an electrochemical device forms a functional layer for an electrochemical device on a separator substrate using any of the aforementioned methods for manufacturing a functional layer for an electrochemical device. According to the disclosed method for manufacturing a separator with a functional layer for an electrochemical device, it is possible to manufacture a separator with a functional layer, which has good process adhesion as well as allows an electrochemical device to exert good cycle characteristics.

The present disclosure aims at advantageously solving the problem set forth above, and the disclosed method for manufacturing an electrochemical device uses a separator with a functional layer for an electrochemical device as obtained using the aforementioned method for manufacturing a separator with a functional layer for an electrochemical device. According to the disclosed method for manufacturing an electrochemical device, an electrochemical device capable of exerting good cycle characteristics can be manufactured.

### (Advantageous Effect)

According to the present disclosure, it is possible to provide a functional layer for an electrochemical device which has good process adhesion as well as allows an electrochemical device to exert good cycle characteristics.

According to the present disclosure, it is also possible to provide a separator with a functional layer for an electrochemical device, which has good process adhesion as well as allows an electrochemical device to exert good cycle characteristics.

Further, according to the present disclosure, it is possible to provide an electrochemical device capable of exerting good cycle characteristics.

### BRIEF DESCRIPTION OF THE DRAWINGS

In the accompanying drawings:
FIG. 1 is a schematic cross-sectional view depicting an example of a functional layer for an electrochemical device according to the present disclosure; and
FIG. 2 is a schematic plan view showing an example of a configuration of a functional layer for an electrochemical device according to the present disclosure in a plan view of a surface of the functional layer.

### DETAILED DESCRIPTION

Embodiments of the present disclosure will be described below in detail.

The disclosed functional layer for an electrochemical device can be used when bonding together members of an electrochemical device. The disclosed separator with a functional layer for an electrochemical device can be manufactured using the disclosed functional layer for an electrochemical device. The disclosed electrochemical device comprises at least the disclosed separator with a functional layer for an electrochemical device.

The disclosed functional layer for an electrochemical device can be preferably manufactured using the disclosed method for manufacturing a functional layer for an electrochemical device. The disclosed separator with a functional layer for an electrochemical device can be preferably manufactured using the disclosed method for manufacturing a separator with a functional layer for an electrochemical device. The disclosed electrochemical device can be preferably manufactured using the disclosed method for manufacturing an electrochemical device.

### (Functional layer for electrochemical device)

The disclosed functional layer comprises inorganic particles and a particulate polymer. The functional layer is characterized in that: it has a particle-detached portion, the ratio of the area of the particle-detached portion to the total area of the particulate polymer and the particle-detached portion in a plan view of a surface of the functional layer falls within a predetermined range; and the volume-average particle diameter of the particulate polymer is larger than the thickness of an inorganic particle layer comprising the inorganic particles. The disclosed functional layer has good process adhesion and also allows an electrochemical device to exert good cycle characteristics.

Further, the disclosed functional layer, formed on a substrate such as a separator substrate, can be suitably used as a single layer that simultaneously exerts a function as a heat-resistant layer for increasing the heat resistance of the substrate and a function as an adhesive layer for firmly bonding members together.

The disclosed functional layer may optionally further comprise other components than the inorganic particles and the particulate polymer described above.

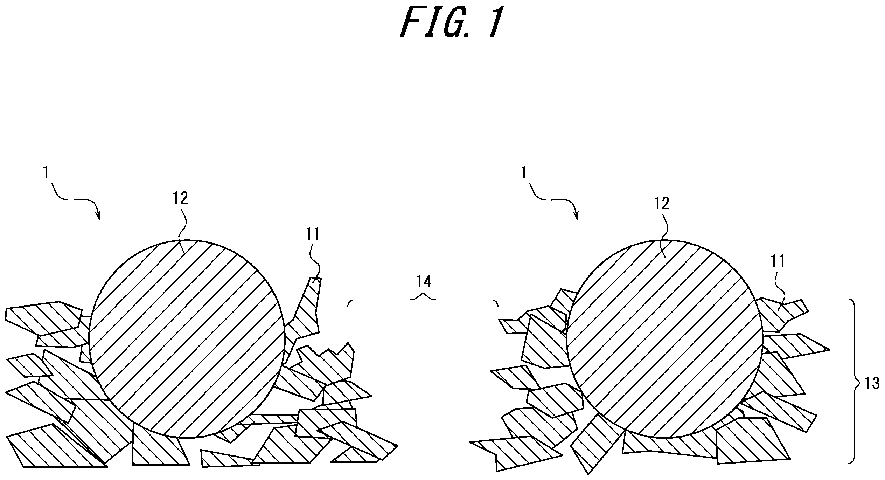

FIG. 1 is a schematic cross-sectional view depicting an example of a functional layer for an electrochemical device according to the present disclosure. As shown in FIG. 1, a functional layer 1 includes inorganic particles 11 and a particulate polymer 12. In the functional layer 1 an inorganic particle layer 13 is formed that comprises a plurality of inorganic particles 11 placed on top of one another in the thickness direction of the functional layer 1. The particulate polymer 12 is embedded in the inorganic particle layer 13. In other words, a portion of the particulate polymer 12 is buried in the inorganic particle layer 13, with a portion of the particulate polymer 12 that is not buried in the inorganic particle layer 13 protruding from the surface of the inorganic particle layer 13.

### <Inorganic particles>

The inorganic particles included in the functional layer are made of material that would provide heat resistance to the functional layer.

Preferred materials for the inorganic particle are those that stably exist under the use environment of an electrochemical device and are electrochemically stable. Preferred inorganic particles for the inorganic particles from such a viewpoint include oxide particles such as aluminum oxide (alumina), hydrate of aluminum oxide (boehmite (AlOOH)), gibbsite (Al(OH₃)), silicon oxide, magnesium oxide (magnesia), magnesium hydroxide, calcium oxide, titanium oxide (titania), barium titanate (BaTIO₃), ZrO, and alumina-silica composite oxide particles; nitride particles such as aluminum nitride and boron nitride particles; covalent crystal particles such as silicon and diamond particles; poorly soluble ionic crystal particles such as barium sulphate, calcium fluoride and barium fluoride particles; clay microparticles such as talc and montmorillonite microparticles; and the like. Preferred are aluminum oxide, boehmite, titanium oxide, and barium sulfate, with aluminum oxide being more preferred. Further, these inorganic particles may be subjected to elemental substitution, surface treatment, solid solution formation, or the like, if necessary.

One of these inorganic particles may be used alone or two or more of them may be used in combination at any ratio.

### <<Volume-average particle diameter of inorganic particles>

The volume-average particle diameter (D50) of the inorganic particles is preferably 0.1 µm or more, more preferably 0.2 µm or more, still more preferably 0.3 µm or more, and is preferably 1 µm or less, more preferably 0.9 µm or less, and still more preferably 0.8 µm or less. When the volume-average particle diameter of the inorganic particles is equal to or higher than the above lower limit, the inorganic particles are densely present in the functional layer. This prevents a reduction in the ion conductivity in the functional layer to improve the electrochemical characteristics, in particular, the output characteristics, of the electrochemical device. When the volume-average particle diameter of the inorganic particles is equal to or smaller than the above upper limit, even when the thickness of the inorganic particle layer is reduced, the functional layer can exert good heat resistance, so that the capacity of the electrochemical device can be increased.

The volume-average particle diameter (D50) of the inorganic particles can be measured by the method described in Examples.

### «Inorganic particle layer»

In the disclosed functional layer, an inorganic particle layer containing inorganic particles is formed. In the functional layer, the inorganic particle layer is usually formed of a plurality of inorganic particles placed on top of one another in the thickness direction of the functional layer.

The inorganic particle layer may further include components other than the inorganic particles. Other components that may be included in the inorganic particle layer include other components described later that may be included in the functional layer.

### [Thickness of inorganic particle layer]

The thickness of the inorganic particle layer is preferably 0.5 µm or more, more preferably 0.8 µm or more, still more preferably 1 µm or more, and is preferably 6 µm or less, more preferably 5 µm or less, still more preferably 4 µm or less. When the thickness of the inorganic particle layer is equal to or greater than the aforementioned lower limit, the heat resistance of the functional layer can be improved. On the other hand, when the thickness of the inorganic particle layer is equal to or less than the upper limit, it is possible to prevent a decrease in the energy density of the electrochemical device having the functional layer. Further, when the thickness of the inorganic particle layer is equal to or lower than the above upper limit, the process adhesion of the functional layer can be improved.

The thickness of the inorganic particle layer can be adjusted for example by changing the content of the inorganic particles in the functional layer composition used in the coating forming step of the functional layer manufacturing method to be described later, and the thickness of the coating to be formed.

### <Particulate polymer>

The particulate polymer included in the functional layer requires that its volume-average particle diameter be larger than the thickness of the inorganic particle layer described above. By making the volume-average particle diameter of the particulate polymer in the functional layer larger than the thickness of the inorganic particle layer, it is possible to allow the functional layer to exert good process adhesion.

The particulate polymer included in the functional layer is not particularly limited as long as it is particulate. Further, the particulate polymer may have a particle shape or other shape after members are bonded together with the functional layer. Further, the particulate polymer may be a crystalline high-molecular weight polymer or a non-crystalline high-molecular weight polymer, or may be a mixture thereof.

In the functional layer, the particulate polymer is usually embedded in the inorganic particle layer described above.

### <<Volume-average particle diameter of particulate polymer>

The particulate polymer in the functional layer preferably has a volume-average particle diameter of 1.0 µm or more, more preferably 2.5 µm or more, still more preferably 5.0 µm or more, and is preferably 10.0 µm or less, more preferably 9.0 µm or less, even more preferably 8.0 µm or less.

When the volume-average particle diameter of the particulate polymer in the functional layer is equal to or higher than the above lower limit, the particulate polymer easily protrudes with respect to the inorganic particles on the surface in the thickness direction of the functional layer, allowing the functional layer to exert better process adhesion. Also, when a member including the functional layer is bonded to another member, a clearance is secured between the inorganic particle layer and the other member in the thickness direction of the functional layer. Because an electrolyte solution is injected through this clearance, the electrolyte solution injection property of the electrochemical device improves. Further, when the volume-average particle diameter of the particulate polymer in the functional layer is equal to or higher than the above lower limit, the heat resistance of the functional layer improves.

The underlying mechanism by which the heat resistance of the functional layer improves by setting the volume-average particle diameter of the particulate polymer in the functional layer to be equal to or more than the above lower limit is not clear. A possible mechanism would be as follows: First, a high content of the inorganic particles is required in the functional layer to improve heat resistance. Due to the protrusion of the particulate polymer with respect to the inorganic particles on the surface in the thickness direction of the functional layer, it is considered that the content of the inorganic particles in the inorganic particle layer is apparently increased, so that the heat resistance is increased.

On the other hand, when the volume-average particle diameter of the particulate polymer in the functional layer is equal to or lower than the above upper limit, the number of particles relative to the volume of the particulate polymer in the functional layer increases and hence the adhesion points at the time of bonding the member comprising the functional layer and another member increase, so that the process adhesion of the functional layer can be further increased.

The volume-average particle diameter of the particulate polymer in the functional layer can be adjusted for example by changing the type and/or amount of metal hydroxides used for the preparation of the particulate polymer used to manufacture the functional layer. Metal hydroxides will be described in detail later. Further, the volume-average particle diameter of the particulate polymer in the functional layer can be adjusted for example by changing the degree of a tension applied to the substrate while it is conveyed on a roll in the functional layer manufacturing method to be described later.

### «Ratio of volume-average particle diameter of particulate polymer to thickness of inorganic particle layer»

The ratio of the volume-average particle diameter of the particulate polymer in the functional layer to the thickness of the inorganic particle layer (volume-average particle diameter of the particulate polymer/thickness of the inorganic particle layer) is preferably 1.1 or more, more preferably 1.2 or more, still more preferably 1.6 or more, and is preferably 10.0 or less, more preferably 5.0 or less, still more preferably 3.5 or less.

When the ratio of the volume-average particle diameter of the particulate polymer in the functional layer to the thickness of the inorganic particle layer is equal to or higher than the above lower limit, the particulate polymer easily protrudes with respect to the inorganic particles on the surface in the thickness direction of the functional layer, so that better process adhesion can be exerted in the functional layer. Also, when a member including the functional layer is bonded to another member, a clearance is secured between the inorganic particle layer and the other member in the thickness direction of the functional layer. Because an electrolyte solution is injected through this clearance, the electrolyte solution injection property of the electrochemical device improves. Further, when the ratio of the volume-average particle diameter of the particulate polymer in the functional layer to the thickness of the inorganic particle layer is equal to or higher than the above lower limit, the heat resistance of the functional layer improves.

On the other hand, when the ratio of the volume-average particle diameter of the particulate polymer in the functional layer to the thickness of the inorganic particle layer is equal to or lower than the above upper limit, the number of particles relative to the volume of the particulate polymer in the functional layer increases and hence the adhesion points at the time of bonding the member comprising the functional layer and another member increase, so that the process adhesion of the functional layer can be further increased.

### <<Particle size distribution of particulate polymer>>

The particle size distribution of the particulate polymer in the functional layer is preferably 1.10 or more, more preferably 1.18 or more, and is preferably 1.50 or less and is more preferably 1.40 or less. When the particle size distribution of the particulate polymer is equal to or higher than the above lower limit, it is possible to form a functional layer which can deform along with an electrode, particularly a negative electrode, when the electrode expands or contracts. On the other hand, when the particle size distribution of the particulate polymer is equal to or less than the above upper limit, variations in the distance between members are small when the members are bonded to each other with the functional layer, so that accumulation of gas can be reduced to improve the storage characteristics of the electrochemical device.

The particle size distribution of the particulate polymer in the functional layer can be adjusted for example by changing the conditions of stirring and classification when preparing the particulate polymer used to manufacture the functional layer by suspension polymerization. Further, the particle size distribution of the particulate polymer in the functional layer can be adjusted for example by changing the degree of a tension applied to the substrate while it is conveyed on a roll in the functional layer manufacturing method to be described later.

### <Glass transition temperature of particulate polymer>

The glass transition temperature (Tg) of the particulate polymer is preferably 10°C or higher, more preferably 20°C or higher, still more preferably 30°C or higher, and is preferably 90°C or lower, more preferably 80°C or lower. When the glass transition temperature of the particulate polymer is equal to or higher than the above lower limit, it is possible to prevent adjacent members bonded together with the functional layer from sticking (blocking) during storage and transportation as well as during the manufacturing process of the electrochemical device. In other words, when the glass transition temperature of the particulate polymer is equal to or higher than the above lower limit, the blocking resistance of the functional layer can be increased. On the other hand, when the glass transition temperature of the particulate polymer is equal to or lower than the above upper limit, good adhesion of the functional layer can be obtained even when the members are pressed and bonded together with the functional layer.

### «Melting point of particulate polymer»

The melting point (Tm) of the particulate polymer is preferably 50°C or higher, more preferably 100°C or higher. When the melting point of the particulate polymer is equal to or higher than the above lower limit, good adhesion of the functional layer can be secured even when the particulate polymer comprises a crystalline high-molecular weight polymer.

When the particulate polymer has both a glass transition temperature and a melting point, it is preferred that the melting point of the particulate polymer be equal to or higher than the above lower limit from the viewpoint of further improving the adhesion of the functional layer.

### «Degree of swelling in electrolyte solution of particulate polymer»

The degree of swelling in electrolyte solution of the particulate polymer is preferably 1.0 time or more, more preferably 1.2 times or more, still more preferably 1.3 times or more, and is preferably 15 times or less, more preferably 10 times or less, still more preferably 3 times or less. When the degree of swelling in electrolyte solution of the particulate polymer is equal to or higher than the above lower limit, the adhesion of the functional layer in the electrolyte solution can be increased. On the other hand, when the degree of swelling in electrolyte solution of the particulate polymer is equal to or less than the above upper limit, the resistance of the functional layer in the electrolyte is reduced, so that the electrochemical characteristics of the electrochemical device having the functional layer can be improved. Further, when the degree of swelling in electrolyte solution of the particulate polymer is equal to or lower than the above upper limit, the electrolyte solution injection property of the electrochemical device can be improved.

The degree of swelling in electrolyte solution of the particulate polymer can be measured by the method described in Examples.

### «Chemical composition of particulate polymer »

The particulate polymer can have any chemical composition as long as a desired effect of the present disclosure is obtained. As such, as the particulate polymer, for example, any known polymer can be used that may be used as a binder when forming a functional layer.

Examples of monomer units constituting the particulate polymer include an aromatic vinyl monomer unit, a (meth)acrylic acid ester monomer unit, and a fluorine atom-containing monomer unit. The particulate polymer may comprise one of these monomer units alone or may comprise two or more of them at any ratio.

The term "(meth)acryl" as used herein refers to "acryl" and/or "methacryl."

The term "comprise a monomer unit" means that a repeating unit derived from a monomer is included in a polymer obtained using that monomer.

### [Aromatic vinyl monomer unit]

When the particulate polymer comprises an aromatic vinyl monomer unit, the elasticity of the particulate polymer is improved to increase the strength of the functional layer.

Aromatic vinyl monomers that may form the aromatic vinyl monomer unit are not particularly limited and examples thereof include styrene, α-methylstyrene, styrenesulfonic acid, butoxystyrene, and vinylnaphthalene, with styrene being preferred.

One of such aromatic vinyl monomers may be used alone or two or more of them may be used in combination at any ratio.

The content of the aromatic vinyl monomer unit in the particulate polymer is preferably 30% by mass or more, more preferably 60% by mass or more, and is preferably 90% by mass or less, more preferably 85% by mass or less, based on the total content (100% by mass) of the monomer units in the particulate polymer. When the content of the aromatic vinyl monomer unit is equal to or higher than the above lower limit, the elasticity of the particulate polymer is improved to secure the strength of the obtained functional layer, and the adhesion of the functional layer to the substrate can be increased. On the other hand, when the content of the aromatic vinyl monomer unit is equal to or lower than the above upper limit, the flexibility of the particulate polymer is increased, so that the adhesion between the functional layer and the substrate can be increased.

The content of a monomer unit can be measured by nuclear magnetic resonance (NMR) such as ¹H-NMR.

### [[(Meth)acrylic acid ester monomer unit]]

Examples of (meth)acrylic acid ester monomers that may form the (meth)acrylic acid ester monomer unit include acrylic acid alkyl esters such as methyl acrylate, ethyl acrylate, n-propyl acrylate, isopropyl acrylate, butyl acrylate (e.g., n-butyl acrylate and t-butyl acrylate), pentyl acrylate, hexyl acrylate, heptyl acrylate, octyl acrylate (e.g., 2-ethylhexyl acrylate), nonyl acrylate, decyl acrylate, lauryl acrylate, n-tetradecyl acrylate, and stearyl acrylate; and methacrylic acid alkyl esters such as methyl methacrylate, ethyl methacrylate, n-propyl methacrylate, isopropyl methacrylate, butyl methacrylate (e.g., n-butyl methacrylate and t-butyl methacrylate), pentyl methacrylate, hexyl methacrylate, heptyl methacrylate, octyl methacrylate (e.g., 2-ethylhexyl methacrylate), nonyl methacrylate, decyl methacrylate, lauryl methacrylate, n-tetradecyl methacrylate, and stearyl methacrylate. Among them, n-butylacrylate, 2-ethylhexyl acrylate and methyl methacrylate are preferred, with 2-ethylhexylacrylate being more preferred.

One of such (meth)acrylic acid ester monomers may be used alone or two or more of them may be used in combination at any ratio.

The content of the (meth)acrylic acid ester monomer unit in the particulate polymer is preferably 5% by mass or more, more preferably 10% by mass or more, and is preferably 65% by mass or less, more preferably 60% by mass or less, based on the total content (100% by mass) of the monomer units in the particulate polymer. When the content of the (meth)acrylic acid ester monomer unit is equal to or higher than the above lower limit, it is possible to improve the blocking resistance of the obtained functional layer by avoiding excessively lowering the glass transition temperature of the particulate polymer. On the other hand, when the content of the (meth)acrylic acid ester monomer unit is equal to or lower than the above upper limit, the adhesion between the functional layer and the substrate can be improved.

### [Cross-linkable monomer unit]

The particulate polymer may comprise a cross-linkable monomer unit in addition to the monomer units described above. A cross-linkable monomer unit refers to a monomer unit at may form a crosslinked structure during or after polymerization by heating or irradiation with an energy ray.

Examples of monomers that may form the cross-linkable monomer unit include multifunctional monomers having two or more polymerization reactive groups in the monomer. Such multifunctional monomers include divinyl compounds such as divinylbenzene; di(meth)acrylic acid ester compounds such as diethylene glycol dimethacrylate, ethylene glycol dimethacrylate, diethylene glycol diacrylate, and 1,3-butylene glycol diacrylate; tri(meth)acrylic acid ester compounds such as trimethylolpropane trimethacrylate, and trimethylolpropane triacrylate; epoxy group-containing ethylenically unsaturated monomers such as allyl glycidyl ether, and glycidyl methacrylate; and the like. Among them, ethylene glycol dimethacrylate is preferred.

One of such cross-linkable monomers may be used alone or two or more of them may be used in combination at any ratio.

The content of the cross-linkable monomer unit in the particulate polymer is preferably 0.02% by mass or more and is preferably 2% by mass or less, more preferably 1.5% by mass or less, still more preferably 1% by mass or less, based on the total content (100% by mass) of the monomer units in the particulate polymer. When the content of the cross-linkable monomer unit falls within the above range, elution of the particulate polymer into the electrolyte solution can be sufficiently prevented.

### [Other monomer units]

The particulate polymer may comprise other monomer units than the aromatic vinyl monomer unit, (meth)acrylic acid ester monomer unit, and cross-linkable monomer unit. Other monomer units are not particularly limited, and examples thereof include a nitrile group-containing monomer unit and an acid group-containing monomer unit described in the section titled "Binder" given later.

### [Nitrile group-containing monomer unit]

Examples of nitrile group-containing monomers that may form the nitrile group-containing monomer unit include α,β-ethylenically unsaturated nitrile monomers. Specifically, any α,β-ethylenically unsaturated compound having a nitrile group can be used without any specific limitations. Examples include acrylonitrile; α-halogenoacrylonitriles such as α-chloroacrylonitrile and α-bromoacrylonitrile; and α-alkylacrylonitriles such as methacrylonitrile and α-ethylacrylonitrile.

One of such nitrile group-containing monomers may be used alone or two or more of them may be used in combination at any ratio.

The content of the nitrile group-containing monomer unit in the particulate polymer is preferably 3% by mass or more, more preferably 4% by mass or more, even more preferably 6% by mass or more, and is preferably 30% by mass or less, more preferably 27% by mass or less, even more preferably 25% by mass or less, based on the total content (100% by mass) of the monomer units in the particulate polymer. When the content of the nitrile group-containing monomer unit is equal to or higher than the above lower limit, the binding force of the particulate polymer can be improved and hence the peel strength of the functional layer can be increased. On the other hand, when the content of the nitrile group-containing monomer unit is equal to or lower than the above upper limit, the flexibility of the particulate polymer can be increased.

The content of other monomer units in the particulate polymer is preferably 0% by mass or more and is preferably 10% by mass or less, more preferably 7% by mass or less, still more preferably 5% by mass or less. When the content of other monomer units is 10% by mass or less, it is possible to prevent reductions in the stability of the functional layer composition used for forming the functional layer.

### [Fluorine atom-containing monomer unit]

The particulate polymer may contain a fluorine atom-containing monomer unit. Examples of fluorine atom-containing monomers that may form the fluorine atom-containing monomer unit include vinylidene fluoride, tetrafluoroethylene, hexafluoropropylene, vinyl trifluoride, vinyl fluoride, and perfluoroalkylvinyl ether. Among them, vinylidene fluoride is preferred.

One of such fluorine atom-containing monomers may be used alone or two or more of them may be used in combination at any ratio.

When the particulate polymer comprises a fluorine atom-containing monomer unit, from the viewpoint of ensuring better adhesion of the functional layer, the particulate polymer is preferably a fluorine atom-containing polymer formed using vinylidene fluoride as a fluorine atom-containing monomer. Preferred are homopolymers of vinylidene fluoride; copolymers of vinylidene fluoride and other fluorine atom-containing monomer(s) copolymerizable with vinylidene fluoride; and copolymers of vinylidene fluoride, other fluorine atom-containing monomers copolymerizable with vinylidene fluoride, and other fluorine atom-containing monomers copolymerizable with the foregoing. Preferred fluorine-atom-containing polymers include polyvinylidene fluoride (PVdF), polytetrafluoroethylene (PTFE), vinylidene fluoride-hexafluoropropylene copolymer (PVdF-HFP), polyvinyl fluoride, and tetrafluoroethylene-perfluoroalkyl vinyl ether copolymer.

### «Preparation of particulate polymer»

The particulate polymer can be prepared for example by polymerizing a monomer composition containing the monomers described above in an aqueous solvent such as water. The proportions of the monomers in the monomer composition are usually the same as those of the corresponding monomer units in the particulate polymer.

Any polymerization mode can be used. Polymerization can be effected by any methods, such as suspension polymerization, emulsion polymerization aggregation, or pulverization. For efficient preparation of the particulate polymer, suspension polymerization or emulsion polymerization aggregation is preferred, with suspension polymerization being more preferred. Moreover, radical polymerization, living radical polymerization and other polymerization reactions can be used.

### [Other agents]

The monomer composition used to prepare the particulate polymer can be blended with any amounts of other agents such as chain transfer agents, polymerization modifiers, polymerization reaction retarders, reactive fluidizing agents, fillers, flame retardants, anti-aging agents, and colorants.

The following describes an exemplary method for preparing the particulate polymer by suspension polymerization.

### [Preparation of particulate polymer by suspension polymerization]

### (1) Preparation of monomer composition

First, monomers for a desired particulate polymer and other optional agents are mixed to prepare a monomer composition.

### (2) Formation of droplets

The monomer composition is then dispersed in water and after the addition of a polymerization initiator, droplets of the monomeric composition are formed. The droplets can be formed by any means, e.g., by stirring the monomer composition in aqueous medium using a disperser such as an emulsification disperser while applying a shear force.

Examples of usable polymerization initiators include oil-soluble polymerization initiators such as t-butylperoxy-2-ethylhexanoate and azobisisobutyronitrile. The polymerization initiator may be added after the monomer composition has been dispersed in water and before forming droplets, or may be added to the monomer composition before it is dispersed in water.

From the viewpoint of stabilizing droplets of the formed monomer composition in water, it is preferable to add a dispersion stabilizer in water to form droplets of the monomer composition. Metal hydroxides such as magnesium hydroxide or sodium dodecylbenzenesulfonate can be used as the dispersion stabilizer.

### (3) Polymerization

After forming droplets of the monomer composition, water containing the formed droplets is heated to initiate polymerization, whereby a particulate polymer is formed in water. The reaction temperature of the polymerization is preferably 50°C or higher and 95°C or lower. The reaction time of the polymerization is preferably 1 hour or more and 10 hours or less, preferably 8 hours or less, more preferably 6 hours or less.

### (4) Washing, filtering, dehydrating, and drying

After completion of the polymerization, water containing the particulate polymer is washed, filtered, and dried according to the conventional methods. In this way a particulate polymer is obtained.

### <Particle-detached portion>

The disclosed functional layer has a particle-detached portion. The particle-detached portion refers to a concave portion (recess) formed in the surface of the inorganic particle layer. With the functional layer having such a particle-detached portion, an electrolyte solution stays within the particle-detached portion in the electrochemical device, so that the electrolyte solution retention property of the functional layer is improved and good cycle characteristics can be exerted in the electrochemical device.

The particle-detached portion is usually formed by detachment (fall) of the particulate polymer embedded in the inorganic particle layer. The particle-detached portion may also be formed by detachment (fall) of the inorganic particle constituting the inorganic particle layer.

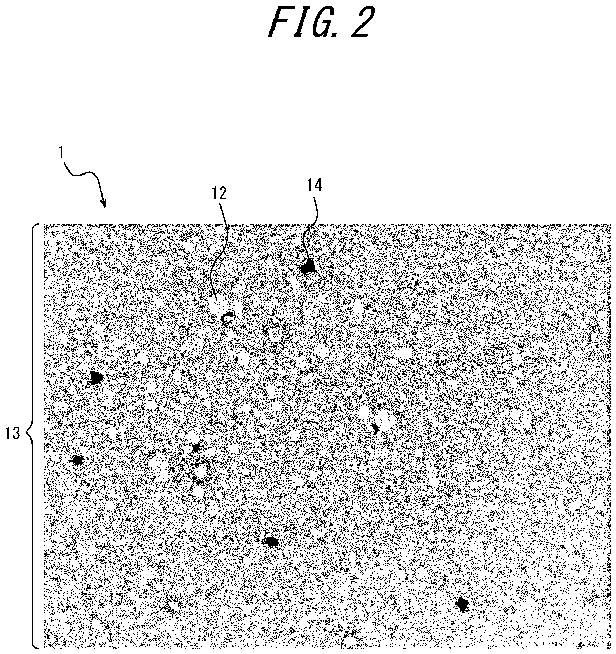

FIG. 2 is a schematic plan view showing an example of a configuration of a functional layer for an electrochemical device according to the present disclosure in a plan view of a surface of the functional layer. As shown in FIG. 2, a functional layer 1 includes an inorganic particle layer 13 containing inorganic particles and a particulate polymer 12. The functional layer 1 has a particle-detached portion 14.

### «Ratio of area of particle-detached portion in total area of particulate polymer and particle-detached portion»

The ratio of the area of the particle-detached portion in the total area of the particulate polymer and the particle-detached portion in a plan view of a surface of the functional layer needs to be 0.1% or more, preferably 0.5% or more, more preferably 1.5% or more, still more preferably 5.0% or more, and needs to be preferably 40.0% or less, preferably 30.0% or less, more preferably 15.0% or less. When the ratio of the area of the particle-detached portion to the total area of the particulate polymer and the particle-detached portion is equal to or greater than the aforementioned lower limit, the cycle characteristics of the electrochemical device can be improved by improving the electrolyte solution retention property of the functional layer. On the other hand, when the ratio of the area of the particle-detached portion in the total area of the particulate polymer and the particle-detached portion is equal to or lower than the above upper limit, since the particulate polymer is moderately left in the functional layer, the process adhesion of the functional layer can be increased. In addition, when the ratio of the area of the particle-detached portion in the total area of the particulate polymer and the particle-detached portion is equal to or less than the above upper limit, the particulate polymer sufficiently remains in the functional layer, so that the separator can be protected by the particulate polymer in the functional layer at the time of pressing in the manufacture of an electrochemical device. Therefore, since the separator is not excessively crushed, the cycle characteristics of the electrochemical device can be improved. Further, since the particulate polymer sufficiently remains in the functional layer, a clearance is secured between the inorganic particle layer and another member. Since an electrolyte solution is injected through the clearance, the electrolyte solution injection property of the electrochemical device can be improved.

The ratio of the area of the particle-detached portion in the total area of the particulate polymer and the particle-detached portion in a plan view of a surface of the functional layer can be adjusted for example by changing the volume-average particle diameter and particle size distribution of the particulate polymer in the functional layer composition used in the coating forming step of the functional layer manufacturing method to be described later, and the degree of a tension applied during the particle-detaching step.

### <<Ratio of total area of particulate polymer and particle-detached portion per unit area of functional layer >>

The ratio of the total area of the particulate polymer and the particle-detached portion per unit area of the functional layer in a plan view of a surface of the functional layer is preferably 10% or less, more preferably 7% or less, and is preferably 1% or more, more preferably 4% or more. The heat resistance of the functional layer can be improved when the ratio of the total area of the particulate polymer and the particle-detached portion per unit area of the functional layer is equal to or less than the above upper limit. On the other hand, when ratio of the total area of the particulate polymer and the particle-detached portion per unit area of the functional layer is equal to or higher than the above lower limit, the process adhesion of the functional layer can be further increased.

The ratio of the total area of the particulate polymer and the particle-detached portion per unit area of the functional layer in a plan view of a surface of the functional layer can be adjusted for example by changing the volume-average particle diameter of the particulate polymer in the functional layer composition used in the coating forming step functional layer manufacturing method to be described later, and the volume ratio of the inorganic particles and the particulate polymer.

### <Other components>

The disclosed functional layer may further comprise other components than the inorganic particles and the particulate polymer described above. Note that other components are usually included in the aforementioned inorganic particle layer.

Other components can be binders and water-soluble polymers, for example.

### <<Binder>>

Binders that may be optionally included in the functional layer are to prevent components included in the functional layer, such as the particulate polymer, from falling off the functional layer.

### [Chemical composition of binder]

Binders can have any chemical composition and examples of binders include known water-insoluble polymers that can be dispersed in dispersion media such as water, e.g., binder resins such as thermoplastic elastomers. Preferred thermoplastic elastomers are conjugated diene polymers or acrylic polymers, with acrylic polymers being more preferred.

The term "water-insoluble" as used herein with regard to a polymer means that when 0.5 g of the polymer is dissolved in 100 g of water at a temperature of 25°C, the insoluble content becomes 90% by mass or more.

The term "conjugated diene polymer" refers to a polymer that comprises a conjugated diene monomer unit. Specific examples of conjugated diene polymers include, but are not specifically limited to, copolymers that comprise an aromatic vinyl monomer unit and an aliphatic conjugated diene monomer unit, such as styrene-butadiene copolymer (SBR); butadiene rubber (BR); acrylic rubber (NBR) (copolymer that comprises an acrylonitrile unit and a butadiene unit); and hydrogenated products thereof.

The term "acrylic polymer" refers to a polymer that comprises a (meth)acrylic acid ester monomer unit.

One of such binders may be used alone or two or more of them may be used in combination at any ratio.

Acrylic polymers that may be suitably used as the binder include, but not specifically limited to, polymers that comprise the aforementioned (meth)acrylic acid ester monomer unit and cross-linkable monomer unit, and an acid group-containing monomer unit described below.

Examples of acid group-containing monomers that may form the acid group-containing monomer unit include carboxyl group-containing monomers, sulfo group-containing monomers, phosphate group-containing monomers, and hydroxyl group-containing monomers.

Examples of carboxyl group-containing monomers include monocarboxylic acids and dicarboxylic acids. Examples of monocarboxylic acids include acrylic acid, methacrylic acid, and crotonic acid. Examples of dicarboxylic acids include maleic acid, fumaric acid, and itaconic acid.

Examples of sulfo group-containing monomers include vinyl sulfonic acid, methylvinyl sulfonic acid, (meth)allyl sulfonic acid, (meth)acrylic acid 2-sulfoethyl, 2-acrylamide-2-methyl propane sulfonic acid, and 3-allyloxy-2-hydroxypropane sulfonic acid.

The term "(meth)allyl" as used herein refers to "allyl" and/or "methallyl," and the "(meth)acryl" as used herein refers to "acryl" and/or "methacryl."

Examples of phosphate group-containing monomers include 2-(meth)acryloyloxyethyl phosphate, methyl-2-(meth)acryloyloxyethyl phosphate, and ethyl-(meth)acryloyloxyethyl phosphate.

The term "(meth)acryloyl" as used herein refers to "acryloyl" and/or "methacryloyl."

Examples of hydroxyl group-containing monomers include 2-hydroxyethyl acrylate, 2-hydroxypropyl acrylate, 2-hydroxyethyl methacrylate, and 2-hydroxypropyl methacrylate.

One of such acid group-containing monomers may be used alone or two or more of them may be used in combination at any ratio.

The content of the (meth)acrylic acid ester monomer unit in the acrylic polymer is preferably 50% by mass or more, more preferably 55% by mass or more, still more preferably 58% by mass or more, and is preferably 98% by mass or less, more preferably 97% by mass or less, still more preferably 96% by mass or less. By setting the content of the (meth)acrylic acid ester monomer unit to be equal to or higher than the lower limit value in the above range, the peel strength of the functional layer can be further increased. In addition, the electrochemical characteristics of the electrochemical device having the functional layer can be further improved by setting the content of the (meth)acrylic acid ester monomer unit to be equal to or less than the upper limit.

The content of the cross-linkable monomer unit in the acrylic polymer is preferably 0.1% by mass or more, more preferably 1.0% by mass or more, and is preferably 3.0% by mass or less, more preferably 2.5% by mass or less. By setting the content of the cross-linkable monomer unit to be equal to or higher than the above limit, it is possible to further improve the electrochemical characteristics of the electrochemical device having the functional layer. Further, by setting the content of the cross-linkable monomer unit to be equal to or lower than the above upper limit value, the peel strength of the functional layer can be further increased.

The content of the acid group-containing monomer unit in the acrylic polymer is preferably 0.1% by mass or more, more preferably 0.3% by mass or more, still more preferably 0.5% by mass or more, and is preferably 20% by mass or less, more preferably 10% by mass or less, still more preferably 5% by mass or less. By setting the content of the acid group-containing monomer unit to be equal to or higher than the above lower limit, it is possible to enhance the dispersibility of the binder in the functional layer to sufficiently improve the electrochemical characteristics of the electrochemical device having the functional layer. Further, by setting the content of the acid group-containing monomer unit to be equal to or lower than the above upper limit value, it is possible to sufficiently improve the electrochemical characteristics of the electrochemical device by reducing the residual water content of the functional layer.

The acrylic polymers may comprise other monomer units. Other monomers that can form such other monomer units in the acrylic polymer include aliphatic conjugated diene monomers such as 1,3-butadiene, 2-methyl-1,3-butadiene, 2,3-dimethyl-1,3-butadiene, and 2-chloro-1,3-butadiene; the aromatic vinyl monomers and nitrile group-containing monomers described above in the section titled "Chemical composition of particulate polymer"; olefin monomers such as ethylene and propylene; halogen atom-containing monomers such as vinyl chloride and vinylidene chloride; vinyl ester monomers such as vinyl acetate, vinyl propionate, vinyl butyrate, and vinyl benzoate; vinyl ether monomers such as methyl vinyl ether, ethyl vinyl ether, and butyl vinyl ether; vinyl ketone monomers such as methyl vinyl ketone, ethyl vinyl ketone, butyl vinyl ketone, hexyl vinyl ketone, and isopropenyl vinyl ketone; and heteroring-containing vinyl compound monomers such as N-vinylpyrrolidone, vinylpyridin, and vinylimidazole. Among them, acrylonitrile is preferred.

One of such other monomers may be used alone or two or more of them may be used in combination at any ratio. The content of other monomer units in the acrylic polymer may be appropriately adjusted.

### [Structure of binder]

The binder in the functional layer can have any structure but is usually non-particulate in shape. The structure of the binder in the functional layer composition used in the functional layer manufacturing method to be described later may be the same as or different from the structure of the binder in the functional layer. For example, the structure of the binder in the functional layer composition may be particulate or non-particulate.

### [Glass-transition temperature of binder]

The glass transition temperature (Tg) of the binder is preferably -100°C or higher, more preferably -90°C or higher, still more preferably -80°C or higher, and is preferably lower than 30°C, more preferably 20°C or lower, still more preferably 15°C or lower. When the glass transition temperature of the binder is equal to or higher than the above lower limit, the adhesion and strength of the binder can be increased. On the other hand, when the glass transition temperature of the binder is less than the above upper limit or less than or equal to the above upper limit, the flexibility of the functional layer can be further increased.

### [Binder content]

The binder content in the functional layer is preferably 0.1 parts by mass or more, more preferably 0.2 parts by mass or more, still more preferably 0.5 parts by mass or more, and is preferably 20 parts by mass or less, more preferably 15 parts by mass or less, still more preferably 10 parts by mass or less, per 100 parts by mass of the inorganic particles. When the binder content is equal to or higher than the above lower limit, it is possible to sufficiently prevent the particulate polymer from falling off the functional layer and to sufficiently enhance the peel strength of the functional layer. On the other hand, when the binder content is equal to or less than the above upper limit, it is possible to prevent reductions in the conductivity of the functional layer to prevent deterioration of the electrochemical characteristics of the electrochemical device.

The binder can be prepared by any methods, e.g., by polymerizing a monomer composition containing the monomers described above in an aqueous solvent such as water. The proportions of the monomers in the monomer composition are usually the same as those of the corresponding monomer units in the binder.

Any polymerization method and any polymerization reaction can be used and those described above for the particulate polymer can be used.

### <<Water-soluble polymer>>

Water-soluble polymers that may be optionally included in the functional layer are used to allow the inorganic particles, particulate polymer and other components to be well dispersed in the functional layer. When the functional layer comprises a water-soluble polymer, such components are well dispersed, so that heat resistance is improved and also better process adhesion can be obtained.

The term "water-soluble" as used herein with regard to a polymer means that when 0.5 g of the polymer is dissolved in 100 g of water at a temperature of 25°C, the insoluble content becomes 1.0% by mass or less.

Preferred water-soluble polymers optionally included in the functional layer are polyacrylic acids for much better dispersing of the inorganic particles and particulate polymer in the functional layer.

The water-soluble polymer content in the functional layer is preferably 0.1 parts by mass or more, more preferably 0.2 parts by mass or more, still more preferably 0.3 parts by mass or more, and is preferably 1 part by mass or less, more preferably 0.9 parts by mass or less, still more preferably 0.8 parts by mass or less, per 100 parts by mass of the inorganic particles. When the water-soluble polymer content is equal to or higher than the above lower limit, the inorganic particles and the particulate polymer are dispersed in the functional layer much better, whereby the heat resistance of the functional layer can be further improved and also the process adhesion of the functional layer can be further increased. On the other hand, when the water-soluble polymer content is equal to or lower than the above upper limit, it is possible to prevent reductions in the ion conductivity of the functional layer to prevent deterioration of the electrochemical characteristics of the electrochemical device.

### <<Other additives>>

The disclosed functional layer may further comprise additives other than the binder and water-soluble polymer described above.

Examples of such additives include thickeners and dispersants.

Thickeners can be carboxy methylcellulose, for example. Dispersants can be sodium dodecylbenzenesulfonate, for example.

The amount of such additives used in the functional layer can be appropriately determined as long as a desired effect of the present disclosure can be obtained.

### (Method for manufacturing functional layer for electrochemical device)

The disclosed method for manufacturing a functional layer for an electrochemical device comprises: forming on a substrate a coating of a composition for an electrochemical device functional layer comprising inorganic particles and a particulate polymer (coating forming step); drying the coating to form a pre-functional layer (drying step); and applying a tension with a value falling within a predetermined range to the substrate on which the pre-functional layer is formed (particle-detaching step). According to the disclosed method for manufacturing a functional layer for an electrochemical device, it is possible to manufacture a functional layer for an electrochemical device that has good process adhesion as well as allows an electrochemical device to exert good cycle characteristics.

The method may comprise other steps than the coating forming step, drying step and particle-detaching step.

The disclosed method for manufacturing a functional layer for an electrochemical device makes it possible to manufacture the aforementioned disclosed functional layer. In other words, the disclosed method for manufacturing a functional layer for an electrochemical device can makes it possible to manufacture a functional layer that comprises inorganic particles and a particulate polymer, wherein the functional layer has a particle-detached portion, the ratio of the area of the particle-detached portion in the total area of the particulate polymer and the particle-detached portion in a plan view falls within a predetermined range, and the volume-average particle diameter of the particulate polymer is larger than the thickness of an inorganic particle layer comprising the inorganic particles.

The disclosed functional layer can be manufactured by methods other than the aforementioned disclosed method for manufacturing a functional layer for an electrochemical device.

### <Coating forming step>

In the coating forming step, a coating of a functional layer composition is formed on a substrate.

### <Preparation of functional layer composition>

The functional layer composition used in the coating forming step comprises at least inorganic particles and a particulate polymer. The composition usually comprises inorganic particles, a particulate polymer, water as a dispersion medium, and other optional components.

### [Inorganic particles]

The inorganic particles to be included in the functional layer composition can be those described above in the section titled "Functional layer for electrochemical device."

### [Particulate polymer]

The glass transition temperature, the melting point and the degree of swelling in electrolyte solution of the particulate polymer to be included in the functional layer composition can be the same as those of the particulate polymer described above in the section titled "Functional layer for electrochemical device."

The chemical composition of the particulate polymer to be included in the functional layer composition can also be the same as that of the particulate polymer described above in the section titled "Functional layer for electrochemical device."

The volume-average particle diameter of the particulate polymer included in the functional layer composition is preferably 1.0 µm or more, more preferably 2.5 µm or more, still more preferably 5.0 µm or more, and is preferably 10.0 µm or less, more preferably 9.0 µm or less, still more preferably 8.0 µm or less.

When the volume-average particle diameter of the particulate polymer in the functional layer composition is equal to or higher than the above lower limit, the particulate polymer easily protrudes with respect to the inorganic particles on the surface in the thickness direction of the functional layer to be manufactured, so that it is possible allow the functional layer to exert better process adhesion. Moreover, when a member having the functional layer to be manufactured is bonded to another member, a clearance is secured between the inorganic particle layer and the other member in the thickness direction of the functional layer. An electrolyte solution is injected through the clearance, thus improving the electrolyte solution injection property of the electrochemical device. Further, when the volume-average particle diameter of the particulate polymer in the functional composition is equal to or higher than the above lower limit, the heat resistance of the functional layer to be manufactured is improved. In addition, when the volume-average particle diameter of the particulate polymer in the functional layer composition is equal to or higher than the above lower limit, in the particle-detaching step described later, the particulate polymer falls off moderately to form a particle-detached portion in the inorganic particle layer, so that the electrolyte solution retention property of the functional layer to be manufactured is further increased and better cycle characteristics can be exerted in the electrochemical device.

On the other hand, when the volume-average particle diameter of the particulate polymer in the functional layer composition is equal to or lower than the above upper limit, the particulate polymer does not excessively fall for example while a separator is conveyed on a roll in the particle-detaching step described later, so that it is possible to sufficiently leave the particulate polymer in the functional layer to be manufactured. Therefore, it is possible to further increase the process adhesion of the functional layer to be manufactured. In addition, the separator can be protected by the particulate polymer remaining in the functional layer at the time of pressing during manufacture of the electrochemical device. Therefore, since the separator is not excessively crushed, the cycle characteristics of the electrochemical device can be improved. Further, since the particulate polymer sufficiently remains in the functional layer to be manufactured, a clearance is secured between the inorganic particle layer and another member. An electrolyte solution is injected through the clearance and hence the electrolyte solution injection property of the electrochemical device can be improved.

Further, when the volume-average particle diameter of the particulate polymer in the functional layer composition is equal to or lower than the above upper limit, the number of particles relative to the volume of the particulate polymer in the functional layer to be manufactured increases and hence the adhesion points at the time of bonding the member comprising the functional layer and another member increase, so that the process adhesion of the functional layer can be further increased.

The volume-average particle diameter of the particulate polymer in the functional layer composition can be adjusted by changing the type and/or the amount of the metal hydroxide used in preparing the particulate polymer.

The particle size distribution of the particulate polymer in the functional layer composition is preferably 1.10 or more, more preferably 1.20 or more, and is preferably 1.50 or less, more preferably 1.40 or less.

When the particle size distribution of the particulate polymer in the functional layer composition is equal to or higher than the above lower limit, the particulate polymer has moderately varied particle diameters, whereby particles of the particulate polymer having large diameters fall and a particle-detached portion is appropriately formed. Therefore, the electrolyte solution retention property of the functional layer to be manufactured is improved, and the cycle characteristics of the electrochemical device can be further improved. Further, when the particle size distribution of the particulate polymer is equal to or higher than the above lower limit, it is possible to form a functional layer that can deform along with an electrode, particularly a negative electrode, when the electrode expands or contracts.

On the other hand, when the particle size distribution of the particulate polymer in the functional layer composition is equal to or less than the above upper limit, the particulate polymer has small particle size variations and hence there is less particulate polymer having a large particle size that may be detached in the particle-detaching step described later, e.g., while the separator is conveyed on a roll, so that the particulate polymer can sufficiently remain in the functional layer to be manufactured. Therefore, it is possible to further increase the process adhesion of the functional layer to be manufactured. In addition, the separator can be protected by the particulate polymer remaining in the functional layer at the time of pressing during manufacture of the electrochemical device. Therefore, since the separator is not excessively crushed, the cycle characteristics of the electrochemical device can be improved. Further, since the particulate polymer sufficiently remains in the functional layer to be manufactured, a clearance is secured between the inorganic particle layer and another member. An electrolyte solution is injected through the clearance, thus improving the electrolyte solution injection property of the electrochemical device.

Further, when the particle size distribution of the particulate polymer in the functional layer composition is equal to or lower than the above upper limit, variations in the distance between members are small when the members are adhered to each other with the functional layer, so that accumulation of gas can be reduced to improve the storage characteristics of the electrochemical device.

The particle size distribution of the particulate polymer in the functional layer composition can be adjusted for example by changing the conditions of stirring and classification when the particulate polymer is prepared by suspension polymerization.

The values of the volume-average particle diameter and the particle size distribution of the particulate polymer in the functional layer composition may be different from those of the volume-average particle diameter and the particle size distribution of the particulate polymer in the functional layer to be manufactured. The reason for this would be as follows: While conveying a separator in the particle-detaching step to be described later, among particles of the particulate polymer included in the functional layer composition, those having larger diameters are more prone to fall, which may result in the values of volume-average particle diameter and particle size distribution of the particulate polymer remaining in the functional layer being reduced.

The particulate polymer included in the functional layer composition can be prepared by the same method as that used to prepare the particulate polymer described above in the section titled "Functional layer for electrochemical device."

### [Volume Ratio of Inorganic Particles to Particulate Polymer]

The volume ratio of the inorganic particles to the particulate polymer (inorganic particles/particulate polymer) in the functional layer composition is preferably 55/45 or more, more preferably 60/40 or more, still more preferably 65/35 or more, and is preferably 95/5 or less, still more preferably 80/20 or less, still more preferably 75/25 or less, particularly preferably 70/30 or less. When the volume ratio of the inorganic particles to the particulate polymer in the functional layer composition is equal to or higher than the above lower limit, the heat resistance of the functional layer to be manufactured can be improved. On the other hand, when the volume ratio of the inorganic particles to the particulate polymer in the functional layer composition is equal to or lower than the above upper limit, the process adhesion of the functional layer to be manufactured can be further increased.

### [Mass ratio of inorganic particles to particulate polymer]

The mass ratio of the inorganic particles to the particulate polymer (inorganic particles/particulate polymer) in the functional layer composition is preferably 49/51 or more, more preferably 58/42 or more, still more preferably 64/36 or more, and is preferably 99/1 or less, more preferably 94/6 or less, still more preferably 91/9 or less. When the mass ratio of the inorganic particles to the particulate polymer in the functional layer composition is equal to or higher than the above lower limit, the heat resistance of the functional layer to be manufactured can be improved. On the other hand, when the mass ratio of the inorganic particles to the particulate polymer in the functional layer composition is equal to or lower than the above upper limit, the process adhesion of the functional layer to be manufactured can be further increased.

### [Other components]

Components other than the inorganic particles and particulate polymer, which may be optionally included in the functional layer composition, can be those described above in the section titled "Functional layer for electrochemical device," e.g., binders and water-soluble polymers. The types and amounts of such other components can also be the same as those described in that section.

### [Method for preparing functional layer composition]

The functional layer composition can be prepared by any methods, e.g., by mixing the aforementioned inorganic particles, particulate polymer, water as a dispersion medium, and optional other components (e.g., binder and water-soluble polymer). Note that, when the particulate polymer or binder is prepared by polymerizing a monomer composition in an aqueous solvent, the particulate polymer or binder may be mixed with other components as it is in the state of aqueous dispersion. In addition, when the particulate polymer or binder is mixed in the state of aqueous dispersion, water in the aqueous dispersion may be used as a dispersion medium.

Any method can be used to mix the aforementioned components. Mixing is preferably effected using a disperser as a mixing device in order to efficiently disperse the components. The disperser is preferably a device that can homogeneously disperse and mix the components. Examples of dispersers that can be used include a ball mill, a sand mill, a pigment disperser, a grinding machine, an ultrasonic disperser, a homogenizer, and a planetary mixer.

### «Substrate»

Any substrate can be used in the coating forming step. A separator substrate is preferably used. As the substrate, a release substrate other than the separator substrate can be used. It should be noted, however, in the case of manufacturing a separator with a functional layer, when a release substrate is used, it is necessary to transfer the functional layer formed on the release substrate onto the separator substrate after the particle-detaching step described later. On the other hand, when a separator substrate is used as the substrate, the transfer operation described above becomes unnecessary, so that a separator with a functional layer can be efficiently manufactured.

The separator substrate will be described later in detail.

The substrate used in the disclosed method for manufacturing a functional layer may be stretchable.

### «Coating forming method»

Any method can be used to form a coating of the functional layer composition on a substrate. The coating may be formed by applying the functional layer composition onto a surface of a substrate, or a substrate may be immersed in the functional layer composition. Because it is easy to control the thickness of the functional layer (inorganic particle layer) to be manufactured, it is preferable to apply the functional layer composition onto the surface of a substrate.

Any method can be used to apply the functional layer composition onto the surface of a substrate. Examples of coating methods include doctor blade coating, reverse roll coating, direct roll coating, gravure coating, bar coating, extrusion coating, and brush coating.

In the coating forming step, a coating of the functional layer composition may be formed on only one side or both sides of a substrate.

### <Drying Step>

In the drying step, the coating of the functional layer composition is dried to form a pre-functional layer.

Any method known in the art can be used to dry the coating. Examples of drying methods include drying by hot air, hot air, low humidity air, vacuum drying, and drying by irradiation such as infrared rays or electron beams. The drying condition is not particularly limited, but the drying temperature is preferably 50°C to 150°C, and the drying time is preferably 1 to 30 minutes.

The pre-functional layer thus formed comprises at least the inorganic particles and particulate polymer. An inorganic particle layer containing the inorganic particles is formed in the pre-functional layer. In the pre-functional layer, usually, the plurality of inorganic particles are placed on top of one another in the thickness direction of the functional layer to form the inorganic particle layer. The particulate polymer is usually embedded in the inorganic particle layer.

### <Particle-detaching step>

In the particle-detaching step, a tension with a value that falls within a predetermined range is applied to the substrate on which the pre-functional layer is formed. Thus, a functional layer formed on the substrate is obtained.

Application of a tension to the substrate on which the pre-functional layer is formed causes some particles of the particulate polymer embedded in the inorganic particle layer of the pre-functional layer to be detached (fall) to form a particle-detached portion. By adjusting the tension applied to the substrate within a predetermined range, the ratio of the area of the particle-detached portion in the total area of the particulate polymer and the particle-detached portion in a plan view of a surface of the functional layer to be manufactured can be easily allowed to fall within, for example, the aforementioned predetermined range described above in the section titled "Functional layer for electrochemical device."

The tension applied to the substrate on which the pre-functional layer is formed in the particle-detaching step is the tension in the in-plane direction of the substrate. For example, in the particle-detaching step, tension can be applied in the longitudinal direction of the substrate on which the pre-functional layer is formed.

The tension applied to the substrate on which the pre-functional layer is formed needs to be 1 N/mm² or more, preferably 1.5 N/mm² or more, more preferably 2 N/mm² or more, still more preferably 2.5 N/mm² or more, even more preferably 4 N/mm² or more, and needs to be 20 N/mm² or less, preferably 16 N/mm² or less, more preferably 12 N/mm² or less, still more preferably 8 N/mm² or less, even more preferably 7 N/mm² or less.

When the tension applied to the substrate on which the pre-functional layer is formed is equal to or higher than the above lower limit, the particulate polymer can be detached from the inorganic particle layer to sufficiently form the particle-detached portion, so that the electrolyte solution retention property of the functional layer to be manufactured can be increased and good cycle characteristics can be exerted in the electrochemical device. Further, when the tension applied to the substrate on which the pre-functional layer is formed is equal to or higher than the above lower limit, particles of the particulate polymer having extremely large diameters are detached, so that variations in the particle diameter of the particulate polymer remaining in the functional layer to be manufactured can be reduced. Thus, variations in the distance between members are small when the members are bonded to each other with the functional layer, so that accumulation of gas can be reduced to improve the storage characteristics of the electrochemical device.

On the other hand, when the tension applied to the substrate on which the pre-functional layer is formed is equal to or lower than the above upper limit, the particulate polymer does not excessively fall off the inorganic particle layer, so that the particulate polymer can be appropriately left in the functional layer to be manufactured. Therefore, it is possible to enhance the process adhesion of the functional layer to be manufactured. In addition, the separator can be protected by the particulate polymer remaining in the functional layer at the time of pressing during manufacture of an electrochemical device. Therefore, since the separator is not excessively crushed, the cycle characteristics of the electrochemical device can be improved. Further, since the particulate polymer sufficiently remains in the functional layer to be manufactured, a clearance is secured between the inorganic particle layer and another member. Because an electrolyte solution is injected through this clearance, the electrolyte solution injection property of the electrochemical device improves.

In the disclosed method for manufacturing a functional layer, the coating forming step, the drying step, and the particle-detaching step described above can be continuously performed while conveying a substrate in a roll-to-roll manner. Specifically, first, a substrate wound around a roll for a substrate is unwound, and a functional layer composition is applied to the surface of the substrate by gravure coating or other coating method to form thereon a coating of the functional layer composition (coating forming step). Then, while conveying the substrate on which the coating is formed, the coating is dried to form a pre-functional layer (drying step). The substrate on which the obtained pre-functional layer is formed is then conveyed, wound around a recovery roll for recovery in a roll form. When the functional layer manufacturing method is carried out in the roll-to-roll manner, tension is applied to the substrate in order to convey the substrate. Specifically, a tension having a value falling within the aforementioned predetermined range is applied to the substrate on which the pre-functional layer is formed. This allows some particles of the particulate polymer embedded in the inorganic particle layer of the pre-functional layer be detached to form a particle-detached portion. Therefore, the conveying operation can be performed as a particle-detaching step. The substrate on which the functional layer is formed can be recovered on the recovery roll.

In the conveying operation, for example, the substrate may be conveyed on a roll such as a conveyance roll. When the substrate is conveyed on the roll, the pre-functional layer formed on the substrate may contact the conveying roll during conveyance, or may be bent along the shape of the conveying roll together with the substrate. When the pre-functional layer formed on the substrate is brought into contact with the conveying roll and/or bent along the shape of the conveying roll while applying tension having a value that falls within the aforementioned predetermined range, some particles of the particulate polymer embedded in the inorganic particle layer of the pre-functional layer may detach form the particle-detached portion.

In the functional layer manufactured by the disclosed functional layer manufacturing method, the volume-average particle diameter of the particulate polymer is larger than the thickness of the inorganic particle layer containing the inorganic particles. When the volume-average particle diameter of the particulate polymer in the functional layer to be manufactured is larger than the thickness of the inorganic particle layer, the functional layer can exert good process adhesion.

The volume-average particle diameter of the particulate polymer in the functional layer and the thickness of the inorganic particle layer can be appropriately adjusted so that the volume-average particle diameter of the particulate polymer in the functional layer becomes larger than the thickness of the inorganic particle layer. Note that the volume-average particle diameter of the particulate polymer in the functional layer and the thickness of the inorganic particle layer can be adjusted by the method described above in the section titled "Functional layer for electrochemical device."

In the disclosed method for manufacturing a functional layer, after a functional layer is formed on one side (front surface) of the substrate by performing the aforementioned coating forming step, drying step, and particle-detaching step, another functional layer may be formed on the other side (back surface) of the substrate by further performing the coating forming step, drying step, and particle-detaching step. The conditions of each step performed on the front surface of the substrate may be the same or different from the conditions of each step performed on the back surface of the substrate.

### (Separator with functional layer for electrochemical device)

The disclosed separator with a functional layer for an electrochemical device (hereinafter also simply referred to as a "separator with a functional layer") comprises the aforementioned disclosed functional layer on a separator substrate. Therefore, the disclosed separator with a functional layer comprises a functional layer that has good process adhesion as well as allows an electrochemical device to exert good cycle characteristics.

The disclosed separator with a functional layer may be provided with the disclosed functional layer only on one side or on both sides of the separator substrate. The disclosed separator with a functional layer may have a functional layer other than the disclosed functional layer.

The separator substrate is not particularly limited, and for example, those described in JP2012204303A can be used. Of these, a microporous membrane made of a polyolefin-based resin (polyethylene, polypropylene, polybutene, polyvinyl chloride) is preferred from the viewpoint that the film thickness of the entire separator with a functional layer can be reduced, and thereby the ratio of the electrode active material in the electrochemical device can be increased to increase the capacity per volume.

### (Method for manufacturing separator with functional layer for electrochemical device)

The disclosed method for manufacturing a separator with a functional layer forms a functional layer on a separator substrate using the aforementioned disclosed method for manufacturing a functional layer for an electrochemical device. According to the disclosed method for manufacturing a separator with a functional layer, it is possible to manufacture a separator with a functional layer, which has good process adhesion as well as allow an electrochemical device to exert good cycle characteristics. According to the disclosed method for manufacturing a separator with a functional layer, it is possible to manufacture the aforementioned disclosed separator with a functional layer.

Further, the disclosed method for manufacturing a separator with a functional layer offers high productivity because a separator with a functional layer manufactured by the disclosed method can be manufactured with lesser steps and in shorter time compared with a substrate provided with a heat-resistant layer and an adhesive layer separately.

The disclosed method for manufacturing a separator with a functional layer can be implemented for example by using a separator substrate as a substrate in the aforementioned disclosed method for manufacturing a functional layer.

The separator substrate used in the disclosed method for manufacturing a separator with a functional layer can be the separator substrate described above in the section titled "Separator with functional layer for electrochemical device."

### (Electrochemical device)

The disclosed electrochemical device comprises the aforementioned separator with a functional layer for an electrochemical device. Because the disclosed electrochemical device comprises the aforementioned disclosed separator with a functional layer, the device can exert good cycle characteristics.

The disclosed electrochemical device is not particularly limited and can be, for example, a lithium-ion secondary battery or an electric double layer capacitor, and is preferably a lithium-ion secondary battery.

Hereinafter, a lithium-ion secondary battery as an example of the disclosed electrochemical device will be described. The lithium-ion secondary battery according to the present disclosure includes the aforementioned disclosed separator with a functional layer. More specifically, the lithium-ion secondary battery includes a positive electrode, a negative electrode, a separator with a functional layer, and an electrolyte solution.

In the lithium-ion secondary battery according to the present disclosure, the positive electrode and the separator substrate, and/or, the negative electrode and the separator substrate are strongly bonded in the electrolyte solution by means of the functional layer of the separator. Increases in the distance between the electrode plates associated with repeated cycles of charging and discharging are also prevented, whereby battery characteristics such as cycle characteristics are improved. Further, in the lithium-ion secondary battery, the heat resistance of the separator substrate is improved by means of the functional layer of the separator. Further, in the lithium-ion secondary battery according to the present disclosure, a particle-detached portion is formed in the functional layer of the separator, so that the electrolyte can be favorably retained therein, allowing the lithium-ion secondary battery to have good cycle characteristics.

The positive electrode, the negative electrode, and the electrolyte solution can be those known in the art which are used in lithium-ion secondary batteries.

### <Positive electrode and negative electrode>

Specifically, the electrodes (positive and negative electrodes) can be electrodes having an electrode mixed material layer formed on a current collector. The current collector may be made of a metal material such as iron, copper, aluminum, nickel, stainless steel, titanium, tantalum, gold, or platinum. Of these metal materials, the current collector for the negative electrode is preferably made of copper. The current collector for the positive electrode is preferably made of aluminum. Further, as the electrode mixed material layer, a layer containing an electrode active material and a binder can be used.

### <Electrolyte solution>

The electrolyte solution is normally an organic electrolyte solution obtained by dissolving a supporting electrolyte in an organic solvent. The supporting electrolyte may, for example, be a lithium salt in the case of a lithium-ion secondary battery. As the lithium salts, for example, LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, (C₂F₅SO₂)NLi and the like. Among them, LiPF₆, LiClO₄ or CF₃SO₃Li is preferred because it is easily dissolved in solvent and has a higher degree of dissociation. One electrolyte may be used individually, or two or more electrolytes may be used in combination. In general, lithium-ion conductivity tends to increase when a supporting electrolyte having a high degree of dissociation is used. Therefore, lithium-ion conductivity can be adjusted through the type of supporting electrolyte that is used.

Organic solvents used in the electrolyte solution are not particularly limited as long as they can dissolve a supporting electrolyte. For a lithium-ion secondary battery, for examples, suitable organic solvents are carbonates such as dimethyl carbonate (DMC), ethylene carbonate (DEC), propylene carbonate (PC), butylene carbonate (BC), methyl ethyl carbonate (ethyl methyl carbonate (EMC)), vinylene carbonate, and the like; esters such as γ-butyrolactone and methyl formate; ethers such as 1,2-dimethoxyethane and tetrahydro furan; and sulfur-containing compounds such as sulfolane and dimethyl sulfoxide; and the like.

Furthermore, a mixed liquid of the aforementioned solvents may be used. Among them, carbonates are preferred because of their high dielectric constant and wide stable potential region. In general, lithium-ion conductivity tends to increase when a solvent having a low viscosity is used. Therefore, lithium-ion conductivity can be adjusted through the type of solvent that is used.

The concentration of the electrolyte in the electrolyte solution may be adjusted as appropriate. Furthermore, known additives may be added to the electrolyte solution.

### (Method for manufacturing electrochemical device)

The disclosed method for manufacturing an electrochemical device comprises using a separator with a functional layer for an electrochemical device as obtained by the aforementioned disclosed method for manufacturing a separator with a functional layer for an electrochemical device. According to the disclosed method for manufacturing an electrochemical device, an electrochemical device capable of exerting good cycle characteristics can be manufactured. According to the disclosed method for manufacturing an electrochemical device, it is possible to manufacture the disclosed electrochemical device described above.

Further, according to the disclosed method for manufacturing an electrochemical device, it is possible to manufacture an electrochemical device with high productivity by reducing the time required for manufacturing a separator as compared with cases where a separator comprising a heat resistant layer and an adhesive layer separately is manufactured and used.

In the case of manufacturing a lithium-ion secondary battery by the disclosed method for manufacturing an electrochemical device, for example, a lithium-ion secondary battery can be manufactured by laminating the positive electrode and the negative electrode described above in the section titled "Electrochemical device" with a separator with a functional layer disposed between the positive and negative electrodes, winding or folding the positive electrode and the negative electrode as necessary, placing the positive electrode and the negative electrode in a battery container, injecting an electrolyte solution into the battery container, and sealing the battery container. As the separator with a functional layer, a separator with a functional layer obtained by the aforementioned disclosed method for manufacturing a separator with a functional layer is used. In order to prevent pressure increase inside the battery and occurrence of overcharging or overdischarging, an expanded metal; an overcurrent preventing device such as a fuse or a PTC device; or a lead plate may be provided in the battery container as necessary. The shape of the battery may be a coin type, button type, sheet type, cylinder type, prismatic type, flat type, or the like, for example.

### EXAMPLES

The following provides a more specific description of the present disclosure based on Examples, which shall not be construed as limiting the scope of the present disclosure. In the following description, "%" and "parts" used in expressing quantities are by mass, unless otherwise specified.

In the case of a polymer that is manufactured through copolymerization of a plurality of types of monomers, the content of a structural unit in the polymer that is formed through polymerization of a given monomer is normally, unless otherwise specified, the same as the ratio (charging ratio) of the given monomer among all monomers used in polymerization of the polymer.

In Examples and Comparative Examples, the glass transition temperature, the melting point, the volume-average particle diameter, the particle size distribution, the degree of swelling in electrolyte solution, the ratio of the total area of the particulate polymer and the particle-detached portion per unit area of the functional layer in a plan view of the functional layer, the ratio of the area of the particle-detached portion in the total area of the particulate polymer and the particle-detached portion, the thickness of the inorganic particle layer, the ratio of the volume-average particle diameter of the particulate polymer in the functional layer to the thickness of the inorganic particle layer, and the volume ratio and the mass ratio of the inorganic particles to the particulate polymer were measured by the methods described below. The process adhesion of the functional layer, the heat resistance of the functional layer, the electrolyte injection property of the secondary battery, the cycle characteristics of the secondary battery, and the storage property of the secondary battery were evaluated by the methods described below.

### <Glass transition temperatures of particulate polymer and binder>

The particulate polymer and binder prepared in each Example or Comparative Example were used as measurement samples. 10 mg of each sample was weighed into an aluminum pan. Measurement was made on a differential thermal analyzer (EXSTAR DSC6220, SII NanoTechnology Inc.) in the measurement temperature range of -100°C to 500°C at a heating rate of 10°C/min under the condition specified in JIS Z 8703, with an empty aluminum pan as a reference. In this way a differential scanning calorimetry (DSC) curve was obtained. The glass-transition temperature (°C) was determined from the point of intersection of the baseline immediately before appearance of an endothermic peak in the DSC curve where the differential signal (DDSC) reaches 0.05 mW/min/mg or higher with the tangent to the DSC curve at the inflection point that appears first after the endothermic peak, in this heating step.

### <Melting point>

Measurement of the melting point (Tm) of the particulate polymer prepared in Example 13 was carried out as follows. First, the particulate polymer was melted by heating and the molten polymer was rapidly cooled with dry ice to give an amorphous polymer. Subsequently, using the amorphous polymer was used as a specimen, the melting point (Tm) was measured with a differential scanning calorimeter (DSC) at a heating rate (heating mode) of 10°C/min.

### <Volume-average particle diameter and particle size distribution of particulate polymer in the functional layer composition>

The dried particulate polymer prepared in each Example or Comparative Example was used as a measurement sample. A quantity corresponding to 0.1g of each measurement sample was weighed, placed into a beaker, and 0.1 mL of an aqueous alkylbenzene sulfonic acid solution (DRIWEL, FUJIFILM Corporation) was added as a dispersant. To the beaker was further added 10-30 mL of diluent (ISOTON II, Beckman Coulter Inc.) and the mixture was dispersed with an ultrasonic disperser at 20 W (Watt) for 3 minutes. Using a particle size analyzer (Multisizer, Beckman Coulter Inc.), the volume-average particle diameter (Dv) of the measurement sample was measured under the following conditions: aperture diameter = 20 µm, medium = ISOTON II, and measured particle count = 100,000. The measured volume-average particle diameter (Dv) was defined as the volume-average particle diameter of the particulate polymer in the functional layer composition. The sample was also measured for number-average particle diameter (Dn) to find the value of the particle size distribution (Dv/Dn) of the particulate polymer in the functional layer composition.

### <Volume-average particle diameter of binder>

The volume-average particle diameters of the binder prepared in each Example were measured by laser diffraction. Specifically, aqueous dispersions containing the prepared binder (solids content adjusted to 0.1% by mass) were used as samples. The particle diameter D50, corresponding to the particle diameter where the cumulative volume percentage from the fine side reaches 50% in a particle size distribution (volume basis) measured with a laser diffraction-type particle size analyzer (LS-230, Beckman Coulter Inc.), was defined as the volume-average particle diameter of the binder.

### <Volume-average particle diameter of inorganic particles>

The particle diameter D50, corresponding to the particle diameter where the cumulative volume percentage from the fine side reaches 50% in a particle size distribution (volume basis) measured by laser diffraction, was defined as the volume-average particle diameter of inorganic particles.

### <Degree of swelling in electrolyte solution>

The aqueous dispersion containing the particulate polymer as prepared in each Example or Comparative Example was placed in a petri dish made of polytetrafluoroethylene and dried at 25°C for 48 hours to prepare a powder. Approximately 0.2 g of the powder was pressed at 200°C under a load of 5 MPa for 2 minutes to form a film. The film was cut into a 1 cm × 1 cm square sheet to provide a specimen. The mass W0 of the specimen was measured.

Further, the specimen was immersed in an electrolyte solution at 60°C for 72 hours. The specimen was then taken out of the electrolyte solution, the electrolyte solution on the surface of the specimen was wiped off, and the mass W1 of the specimen was measured.

Using the mass W0 and mass W1, the degree of swelling in electrolyte solution S (times) was calculated using the formula: S=W1/W0.

The electrolyte solution used was a solution obtained by dissolving the supporting electrolyte LiPF₆ in a mixed solvent of ethylene carbonate (EC), diethyl carbonate (DEC), and vinylene carbonate (VC) (volume ratio: EC/DEC/VC=68.5/30/1.5) at a concentration of 1 mol/L.

### <Volume-average particle diameter and particle size distribution of particulate polymer in functional layer>

Using a field emission scanning electron microscope (FE-SEM) (JSM-7800 Prime, Japan Electronics Corporation, detector: BED-C, acceleration voltage: 5 kV, magnification: ×5,000 to ×10,000), the surface of the functional layer of the separators with a functional layer as prepared in each Example or Comparative Example was observed to obtain an enlarged image of each of 200 particles of the particulate polymer.

For the observed images of the particulate polymer, binarization was performed to determine the area of the particulate polymer within the field of view. Specifically, binarization (threshold value: 38) was performed using image-analysis software (WinROOF, Mitani Shoji Co., Ltd.), with the emphasis condition set to "brightness: -30" and "contrast: +70" and the filter set to 7×7 and two threshold values. With the surface of the functional layer for each of the 200 SEM images viewed in plan, the area of the particulate polymer was found. Assuming that the particle's shape is a complete sphere, the diameter of the particulate polymer was calculated from the obtained area of the particulate polymer. From the diameters of 200 particles of the particulate polymer, the volume was calculated assuming that the particle's shape was a complete sphere. With the total of the volumes of all the particles of the particulate polymer taken as 100%, the amount of the particulate polymer present in each particle diameter section was expressed as % and the particle diameter at which the amount of the particulate polymer reached 50% was defined as the volume-average particle diameter (Dv) of the particulate polymer in the functional layer.

Next, by dividing the total value of the diameters of particles of the particulate polymer obtained from the obtained 200 SEM images by the number (200) of particles of the particulate polymer, the average value of the diameters of the particulate polymer was obtained and defined as the number-average particle diameter (Dn). Then, based on the values of the volume-average particle diameter (Dv) and the number-average particle diameter (Dn) obtained above, the value of the particle size distribution (Dv/Dn) of the particulate polymer in the functional layer was calculated.

### <Ratio of total area of particulate polymer and particle-detached portion per unit area of functional layer and ratio of particle-detached portion in total area of particulate polymer and particle-detached portion in a plan view of functional layer>

Five field views (186 µm long and 248 µm wide) of each of the front and back surfaces of the separator with a functional layer manufactured in each Example or Comparative Example were observed with a field emission scanning electron microscope (FE-SEM) (JSM-7800 Prime, Japan Electronics Corporation, detector: BED-C, acceleration voltage: 5 kV, magnification: ×500).

The observed 10 field views were binarized and the ratios of the areas of the particulate polymer and the particle-detached portion in the field view were determined. Specifically, binarization (threshold value: 38) was performed using image-analysis software (WinROOF, Mitani Shoji Co., Ltd.), with the emphasis condition set to "brightness: -30" and "contrast: +70" and the filter set to 7×7 and two threshold values. From the average value obtained from 10 SEM images of field view, the ratio S1(%) of the total area of the particulate polymer and particle-detached portion per unit area of the surface of the functional layer in a plan view of the functional layer was obtained. In addition, binarization (threshold value: 38) was performed using image-analysis software (WinROOF, Mitani Shoji Co., Ltd.), with the emphasis condition set to "brightness: +30" and "contrast: +70" and filter set to 7×7 and two threshold values, and the ratio S2 (%) of the area of the particle-detached portion per unit area of the surface of the functional layer was obtained. Then, using the formula 100 × S2/S1, the ratio (%) of the area of the particle-detached portion in the total area of the particulate polymer and particle-detached portion in a plan view of the functional layer was calculated.

### <Thickness of inorganic particle layer>

A cross section of the separator with a functional layer was observed using the aforementioned field emission scanning electron microscope (FE-SEM), and the thickness of the inorganic particle layer was calculated from the obtained SEM image. The thickness of the inorganic particle layer was defined as the distance from the surface of the separator substrate on which the functional layer was formed to the inorganic particle positioned farthest in the vertical direction.

### <Ratio of volume-average particle diameter of particulate polymer to thickness of inorganic particle layer in functional layer >

Based on the volume-average particle diameter of the particulate polymer in the functional layer and the thickness of the inorganic particle layer as obtained above, the ratio of the volume-average particle diameter of the particulate polymer to the thickness of the inorganic particle layer in the functional layer (volume-average particle diameter of the particulate polymer/thickness of the inorganic particle layer) was found.

### <Volume and mass ratios of inorganic particles to particulate polymer>

From the amounts of the inorganic particles (alumina) and the particulate polymer added to prepare a slurry composition, the volume and mass ratios of the inorganic particles (alumina) to the particulate polymer (inorganic particles/particulate polymer) were found. Calculations were made with the density of alumina taken as 4 g/cm³.

### <Process adhesion>

The positive electrode, the negative electrode, and the separator with a functional layer as manufactured in each Example or Comparative Example were each cut into a 10 mm × 50 mm piece. The positive electrode and the separator with a functional layer were laminated and pressed with a roll press at 70°C under a load of 8 kN/m at a pressing speed of 30 m/min to give an integrated product in which the positive electrode and the separator with a functional layer were integrated into one piece. Note that they were laminated such that the positive electrode faces the front surface of the separator with a functional layer.

An adhesive cellophane tape was attached to the surface of the electrode with the surface of the integrated product on the current collector side of the positive electrode facing downward. An adhesive cellophane tape specified in JIS Z1522 was used. The cellophane tape had been affixed to a horizontal test stage. A stress when the separator with a functional layer was peeled by pulling one end of the separator vertically upward at a tensile rate of 50 mm/min was measured.

A stress was measured also for the negative electrode in the same manner as described above for the positive electrode. Note that the negative electrode and he separator with a functional layer were laminated such that the negative electrode faces the back surface of the separator with a functional layer.

The aforementioned stress measurement was performed for a total of 6 times-3 times for the integrated product of the positive electrode and the separator with a functional layer, and 3 times for the integrated product of the negative electrode and the separator with a functional layer. An average of the measured stress values was obtained as defined as peal strength (N/m).

The calculated peel strength was used to evaluate the process adhesion between the electrode and the separator with a functional layer based on the criteria given below. The higher the peel strength, the better the process adhesion of the functional layer, i.e., the adhesion between battery members bonded with the functional layer during the manufacturing process of a secondary battery).
A: Peel strength is 3 N/m or more
B: Peel strength is 2 N/m or more and less than 3 N/m
C: Peel strength is less than 2 N/m

### <Heat resistance of functional layer>

The separator with a functional layer was cut into a 12 cm × 12 cm square piece, and a 10 cm × 10 cm square image was drawn within the square to prepare a specimen. The specimen was placed for 1 hour in a thermostat chamber set at 150°C, and %change in the area of the square image drawn on the square (=[(square area before placement in chamber) - (square area after placement in chamber) / square area before placement in chamber] × 100] was found as a %thermal shrinkage and evaluated based on the criteria given below. A smaller %thermal shrinkage indicates better heat resistance of the separator with a functional layer.
A: %thermal shrinkage is less than 3%
B: %thermal shrinkage is 3% or greater to less than 5%
C: %thermal shrinkage is 5% or more

### <Electrolyte solution injection property >

For the lithium-ion secondary battery fed with electrolyte solution as manufactured in each Example or Comparative Example, the inside of the lithium-ion secondary battery was depressurized to -100 kPa and held in this state for 1 minute. Heat sealing was then performed. After 10 minutes the electrode (positive electrode) was disassembled and visually checked as to how much it was impregnated with the electrolyte solution. Evaluations were made based on the criteria given below. The more the portions of the electrode that were impregnated with electrolyte solution, the better the electrolyte solution injection property of the lithium-ion secondary battery.
A: All the surfaces of the electrode were impregnated with electrolyte solution
B: The area of portions remained non-impregnated with electrolyte solution is less than 1 cm² (except a case where all the surfaces were impregnated)
C: The area of portions remained non-impregnated with electrolyte solution is 1 cm² or more.

### <Cycle characteristics of secondary battery (100 cycles)>

The lithium-ion secondary battery manufactured in each Example or Comparative Example was allowed to stand for 5 hours at a temperature of 25°C after electrolyte solution injection. Next, the lithium-ion secondary battery was charged to a cell voltage of 3.65 V with constant-current at 0.2C at a temperature of 25°C, and was then subjected to aging treatment for 12 hours at a temperature of 60°C. The lithium-ion secondary battery was subsequently discharged to a cell voltage of 3.00 V with constant-current at 0.2C at a temperature of 25°C. Thereafter, CC-CV charging of the lithium-ion secondary battery was performed with constant-current at 0.2C (upper limit cell voltage: 4.20 V) and CC discharging of the lithium-ion secondary battery was performed to 3.00 V with constant-current at 0.2C. This charging and discharging at 0.2C was repeated three times.

Thereafter, charging/discharging was performed for 100 cycles (cell voltage: 4.20-3.00V, charging/discharging rate: 1.0C, temperature: 25°C). The discharge capacity at the first cycle was defined as X1 and the discharge capacity at the 100th cycle was defined as X2.

Using discharge capacity X1 and discharge capacity X2, %capacity retention ΔC' = (X2/X1) × 100 was obtained and evaluated based on the criteria given below. The larger the value of %capacity retention ΔC', the better the cycle characteristics of the secondary battery at 100th cycle. Better cycle characteristics of the secondary battery at 100th cycle would be due to good retention of the electrolyte solution by the functional layer of the secondary battery.
A: %Capacity retention ΔC' is 93% or more
B: %Capacity retention ΔC' is 90% or more and less than 93%
C: %Capacity retention ΔC' is 87% or more and less than 90%

### <Cycle characteristics of secondary battery (300 cycles)>

The lithium-ion secondary battery manufactured in each Example or Comparative Example was allowed to stand for 5 hours at a temperature of 25°C after electrolyte solution injection. Next, the lithium-ion secondary battery was charged to a cell voltage of 3.65 V with constant-current at 0.2C at a temperature of 25°C, and was then subjected to aging treatment for 12 hours at a temperature of 60°C. The lithium-ion secondary battery was subsequently discharged to a cell voltage of 3.00 V with constant-current at 0.2C at a temperature of 25°C. Thereafter, CC-CV charging of the lithium-ion secondary battery was performed with constant-current at 0.2C (upper limit cell voltage: 4.20 V) and CC discharging of the lithium-ion secondary battery was performed to 3.00 V with constant-current at 0.2C. This charging and discharging at 0.2C was repeated three times.

Thereafter, charging/discharging was performed for 300 cycles (cell voltage: 4.20-3.00V, charging/discharging rate: 1.0C, temperature: 25°C). The discharge capacity at the first cycle was defined as X1 and the discharge capacity at the 300th cycle was defined as X3.

Using discharge capacity X1 and discharge capacity X3, %capacity retention ΔC'= (X3/X1) × 100 was obtained and evaluated based on the criteria given below. The larger the value of %capacity retention ΔC', the better the cycle characteristics of the secondary battery at 300th cycle. Better cycle characteristics of the secondary battery at 300th cycle would be due to protection of the separator by the particulate polymer in the functional layer at the time of pressing during the manufacture of the secondary battery thus preventing the separator from excessively being crushed.
A: %Capacity retention ΔC' is 90% or more
B: %Capacity retention ΔC' is 85% or more and less than 90%
C: %Capacity retention ΔC' is less than 85%

### <Storage characteristics of secondary battery>

After the secondary battery manufactured in each Example or Comparative Example was allowed to stand for 24 hours, it was charged to 4.4V and discharged to 3.0V at a charge/discharge rate of 0.1C, and the initial capacity C0 was measured. Further, the battery was charged to 4.4V at a charge/discharge rate of 0.1C in an environment of 25°C. After the battery was allowed to stand for 7 days at 60°C, the residual capacity C1 was measured by discharging to 3.0V at a discharge rate of 0.1C. From the obtained values of C0 and C1, %residual capacity ΔC was calculated using the formula ΔC=C1/C0×100. The higher the % residual capacity, the better the battery performance (i.e., better storage characteristics) the battery can retain even when it has been stored at a high potential under a high temperature condition.
A: 80% or more
B: 75% or more and less than 80%
C: Less than 75%

### (Example 1)

### <Preparation of particulate polymer (A)>

### [Preparation of monomer composition (A)]

Monomer composition (A) was prepared by mixing 81.9 parts of styrene as an aromatic vinyl monomer, 18 parts of 2-ethylhexylacrylate as a (meth)acrylic acid ester monomer, and 0.1 parts of ethylene glycol dimethacrylate as a cross-linkable monomer.

### [Preparation of metal hydroxide]

To aqueous solution (A1) obtained by dissolving 8.0 parts of magnesium chloride in 200 parts of ion-exchanged water was gradually added under stirring aqueous solution (A2) obtained by dissolving 5.6 parts of sodium hydroxide in 50 parts of ion-exchanged water to prepare colloidal dispersion (A) containing magnesium hydroxide as a metal hydroxide.

### [Suspension polymerization]

Particulate polymer (A) was prepared by suspension polymerization. Specifically, monomer composition (A) obtained as described above was charged into colloidal dispersion (A) containing magnesium hydroxide, and after further stirring, 2.0 parts of t-butylperoxy-2-ethylhexanoate (PERBUTY O, NOF Corporation) as a polymerization initiator was added to give a mixed liquid. The obtained mixed liquid was subjected to high shear stirring using an in-line emulsification disperser (Cavitron, Pacific Machinery & Engineering Co., Ltd.) at a rotation speed of 15,000 rpm for 1 minute to form droplets of monomer composition (A) in colloidal dispersion (A) containing magnesium hydroxide.

Colloidal dispersion (A) containing magnesium hydroxide, in which droplets of monomer composition (A) were formed, was placed in a reactor and the temperature was raised to 90°C to effect a polymerization reaction for 5 hours to give an aqueous dispersion containing particulate polymer (A).

The aqueous dispersion containing particulate polymer (A) was used to measure the degree of swelling in electrolyte solution. The results are shown in Table 1.

Further, while stirring the aqueous dispersion containing particulate polymer (A), sulfuric acid was added dropwise at room temperature (25°C) for acid washing until pH reached 6.5 or below. Filter separation was then performed and 500 parts of ion-exchanged water was added to the obtained solids to form a slurry again, and water washing treatment (washing, filtration and dehydration) was repeated several times. Filter separation was then performed, and the obtained solids were placed in a container of a dryer and dried at 40°C for 48 hours to give dried particulate polymer (A).

The glass transition temperature, volume-average particle diameter, and particle size distribution of the obtained particulate polymer (A) were measured. The results are shown in Table 1.

### <Preparation of aqueous dispersion containing binder (α)>

To a reactor equipped with a stirrer were added 70 parts of ion-exchanged water, 0.15 parts of sodium lauryl sulfate (EMAL^{®} 2F ("EMAL" is a registered trademark in Japan, other countries, or both), Kao Corporation) as an emulsifier, and 0.5 parts of ammonium persulfate as a polymerization initiator, the gas phase was replaced with nitrogen gas, and the temperature was raised to 60°C.

In another container, 50 parts of ion-exchanged water, 0.5 parts of sodium dodecylbenzenesulfonate as a dispersion stabilizer, 94 parts of n-butylacrylate as a (meth)acrylic acid ester monomer, 2 parts of methacrylic acid as an acid group-containing monomer, and 2 parts of acrylonitrile as a nitrile group-containing monomer, and 1 part of allyl methacrylate and 1 part of allyl glycidyl ether as cross-linkable monomers were mixed to prepare monomer composition (α).

Polymerization was carried out by continuously adding the obtained monomer composition (α) to the reactor equipped with a stirrer described above over a period of 4 hours. The reaction was carried out at 60°C during the addition. After completion of the addition, the reaction mass was further stirred for 3 hours at 70°C, and then the reaction was stopped to afford an aqueous dispersion containing particulate binder (α) as an acrylic polymer. The obtained binder (α) had a volume-average particle diameter of 0.25 µm and a glass transition temperature of -40°C.

### <Preparation of slurry composition (functional layer composition)>

To 100 parts of alumina (AKP3000, Sumitomo Chemical Co., Ltd., volume-average particle diameter: 0.7 µm) as inorganic particles was added 0.5 parts of polyacrylic acid as a water-soluble polymer, and ion-exchanged water was added so that the mixture had a solids content of 55%. The mixture was mixed using a ball mill to afford pre-mixing slurry 1.

To 100 parts of particulate polymer (A), 0.2 parts of sodium dodecylbenzenesulfonate as a dispersant (NEOPELEX G-15, Kao Corporation) was added and ion-exchanged water was also added mixed so that the mixture had a solids content of 40% to afford pre-mixing slurry 2.

Pre-mixing slurry 1 and pre-mixing slurry 2 were mixed so that the volume ratio of inorganic particles (alumina) to particulate polymer (A) (inorganic particles/particulate polymer (A)) in the obtained slurry composition was 70/30. Further, 4 parts of solids of the aqueous dispersion containing binder (α) and 1.5 parts of carboxy methylcellulose as a thickener were added per 100 parts of the inorganic particles. Further, ion-exchanged water was added so that the mixture had a solids content of 40% to afford a slurry composition (functional layer composition).

Note that the mass ratio of the inorganic particles (alumina) to particulate polymer (A) (inorganic particles/particulate polymer (A)) in the slurry composition was 90/10.

### <Preparation of separator with functional layer by gravure coating)>

A microporous membrane made of polyethylene (thickness: 12 µm) was prepared as a separator substrate. In a roll-to-roll manner, application of the slurry composition on one side of the separator substrate, drying of the coating formed on the separator substrate, and conveyance of the separator substrate on which a pre-functional layer was formed, and recovery by winding around a recovery roll were continuously performed. Note that the application of the slurry composition to one side of the separator substrate was carried out by gravure coating. Drying of the coating was carried out at 50°C. The conveying speed of the separator substrate was set to 15 m/min. When the separator substrate was conveyed, a tension of 4 N/mm² was applied in longitudinal direction of the separator substrate having the pre-functional layer formed. The same operation as described above was performed on the other side of the separator substrate. In this way a separator with a functional layer was obtained wherein a functional layer having a 2.0 µm-thick inorganic particle layer was formed on both sides of the separator substrate.

For convenience of description, the one side of the separator on which the functional layer was first formed is referred to as the "front surface" and the other side on which the functional layer was later formed is referred to as the "back surface."

### <Manufacture of positive electrode>

100 parts of LiCoO₂ (volume-average particle diameter: 12 µm) as a positive electrode active material, 2 parts of acetylene black (HS-100, Denka Company Limited) as a conductive material, 2 parts of solids of polyvinylidene fluoride (#7208, Kureha Corporation) as a binder material for a positive electrode mixed material layer, and N-methylpyrrolidone as solvent were mixed to a total solids content of 70%. These materials were mixed with a planetary mixer to prepare a positive electrode slurry composition.

The slurry composition was applied onto an aluminum foil having a thickness of 20 µm as a current collector by a comma coater so that the film thickness after drying became about 150 µm, and dried. The applied slurry composition was dried by conveying the aluminum foil through an oven at 60°C for 2 minutes at a rate of 0.5 m/min. Thereafter, heat treatment was performed for 2 minutes at 120°C to give a pre-pressing positive electrode web, which was rolled in a roll press to give a pressed positive electrode having a positive electrode mixed material layer (thickness: 60 µm).

### <Manufacture of negative electrode>

A 5 MPa pressure-resistant vessel equipped with a stirrer was charged with 33 parts of 1,3-butadiene, 3.5 parts of itaconic acid, 63.5 parts of styrene, 0.4 parts of sodium dodecylbenzenesulfonate as an emulsifier, 150 parts of deionized water, and 0.5 parts of potassium persulfate as a polymerization initiator. The materials were sufficiently stirred and then heated to 50°C to initiate polymerization. When the polymerization conversion rate reached 96%, cooling was performed to stop the reaction to yield a mixture containing a binder for a negative electrode mixed material layer (SBR). To the mixture, 5% aqueous sodium hydroxide solution was added to adjust the pH to 8, after which unreacted monomers were removed by distillation under heating and reduced pressure. Thereafter, the mixture was cooled to 30°C or lower to give an aqueous dispersion containing the target binder for a negative electrode mixed material layer.

80 parts of artificial graphite (volume-average particle diameter: 15.6 µm) as a negative electrode active material (1) and 16 parts of silicon-based active material SiOx (volume-average particle diameter: 4.9 µm) as a negative electrode active material (2), 2.5 parts of solids of 2% aqueous solution of carboxymethylcellulose sodium salt (MAC350HC, Nippon Paper Industries, Co., Ltd.) as a viscosity adjuster, and ion-exchanged water were mixed to a solids content of 68%, followed by further mixing at 25°C for 60 minutes. Further, the solids content was adjusted to 62% with ion-exchanged water and the mixture was further mixed at 25°C for 15 minutes to give a mixed liquid. To this mixed liquid were added 1.5 parts of solids of the aforementioned aqueous dispersion of a binder material for a negative electrode mixed material layer and ion-exchanged water to a final solids content of 52%, and mixed for another 10 minutes to give a mixed liquid. The mixed liquid was subjected to defoaming treatment under reduced pressure to give a negative electrode slurry composition having good fluidity.

The slurry composition was applied onto a copper foil having a thickness of 20 µm as a current collector by a comma coater so that the film thickness after drying became about 150µm, and dried. This drying was performed by transporting the copper foil through an oven at 60°C at a rate of 0.5 m/min over 2 minutes. Thereafter, heat treatment was performed for 2 minutes at 120°C to give a pre-pressing negative electrode web, which was rolled with a roll press to give a pressed negative electrode comprising a negative electrode mixed material layer (thickness: 80 µm).

The separator with a functional layer obtained as described above was used to determine the volume-average particle diameter and particle size distribution of the particulate polymer in the functional layer, the ratio of the total area of the particulate polymer and the particle-detached portion per unit area of the functional layer in a plan of the functional layer, the ratio of the area of the particle-detached portion in the total area of the particulate polymer and the particle-detached portion in a plan of the functional layer, the thickness of the inorganic particle layer, and the ratio of the volume-average particle diameter of the particulate polymer to the thickness of the inorganic particle layer. Further, the process adhesion and heat resistance of the functional layer were evaluated using the separator with a functional layer, the positive electrode, and the negative electrode obtained as described above. The results are shown in Table 1.

### <Manufacture of lithium-ion secondary battery>

The positive electrode manufactured as described above was cut into a rectangle of 49cm × 5cm size, placed so that the surface on the positive electrode mixed material layer side was on the upper side, and the separator with a functional layer cut into 120 cm × 5.5 cm size was disposed on the positive electrode mixed material layer so that the positive electrode was positioned on one side in the longitudinal direction of the separator with a functional layer. Further, the negative electrode manufactured as described above was cut into a rectangle of 50 cm × 5.2 cm size, and disposed on the separator with a functional layer such that the surface on the negative electrode mixed material layer side faces the separator with a functional layer and the negative electrode is located on the other side in the longitudinal direction of the separator with a functional layer. At this time, the members were disposed so that the front surface of the separator with a functional layer faces the positive electrode and the back surface of the separator with a functional layer faces the negative electrode. Then, the obtained laminate was wound by a winding machine to give a roll.

The roll was flattened at 70°C under a pressure of 1 MPa by pressing and enclosed with an aluminum packaging material outer package as a battery outer package. An electrolyte solution [solvent: ethylene carbonate/diethyl carbonate/vinylene carbonate (volume ratio) = 68.5/30/1.5, electrolyte: 1 mol/L LiPF₆] was injected so as not to leave air. Then, the opening of the aluminum packaging material packing was heat-sealed and closed at a temperature 150°C to manufacture a wound lithium-ion secondary battery having a capacity of 800 mAh.

The obtained lithium-ion secondary battery was used to evaluate the electrolyte injection property, cycle characteristics, and storage characteristics. The results are shown in Table 1.

### (Example 2)

Particulate polymer (A), binder (α), slurry composition, separator with a functional layer, positive electrode, negative electrode, and lithium-ion secondary battery were prepared or manufactured as in Example 1 except that in the manufacture of the separator with a functional layer, the value of the tension applied at the time of take-up was changed from 4 N/mm² to 7 N/mm². Various measurements and evaluations were made as in Example 1. The results are shown in Table 1.

### (Example 3)

Particulate polymer (A), binder (α), slurry composition, separator with a functional layer, positive electrode, negative electrode, and lithium-ion secondary battery were prepared or manufactured as in Example 1 except that in the manufacture of the separator with a functional layer, the value of the tension applied at the time of take-up was changed from 4 N/mm² to 1 N/mm², and. Various measurements and evaluations were made as in Example 1. The results are shown in Table 1.

### (Example 4)

Particulate polymer (A), binder (α), slurry composition, separator with a functional layer, positive electrode, negative electrode, and lithium-ion secondary battery were prepared or manufactured as in Example 1 except that in the manufacture of the separator with a functional layer, the value of the tension applied at the time of take-up was changed from 4 N/mm² to 2 N/mm². Various measurements and evaluations were made as in Example 1. The results are shown in Table 1.

### (Example 5)

Particulate polymer (A), binder (α), slurry composition, separator with a functional layer, positive electrode, negative electrode, and lithium-ion secondary battery were prepared or manufactured as in Example 1 except that in the manufacture of the separator with a functional layer, the value of the tension applied at the time of take-up was changed from 4 N/mm² to 10 N/mm². Various measurements and evaluations were made as in Example 1. The results are shown in Table 1.

### (Example 6)

Particulate polymer (A), binder (α), slurry composition, separator with a functional layer, positive electrode, negative electrode, and lithium-ion secondary battery were prepared or manufactured as in Example 1 except that in the manufacture of the separator with a functional layer, the value of the tension applied at the time of take-up was changed from 4 N/mm² to 20 N/mm². Various measurements and evaluations were made as in Example 1. The results are shown in Table 1.

### (Example 7)

Binder (α), slurry composition, separator with a functional layer, positive electrode, negative electrode, and lithium-ion secondary battery were prepared or manufactured as in Example 1 except that in the preparation of the slurry composition, particulate polymer (B) as prepared below was used instead of particulate polymer (A). Various measurements and evaluations were made as in Example 1. The results are shown in Table 1.

### <Preparation of particulate polymer (B)>

Particulate polymer (B) was prepared by carrying out the same operation as in the preparation of particulate polymer (A) of Example 1, except that colloidal dispersion (B) containing magnesium hydroxide as a metal hydroxide was used instead of colloidal dispersion (A) containing magnesium hydroxide.

Colloidal dispersion (B) containing magnesium hydroxide was prepared by gradually adding under stirring aqueous solution (B2) obtained by dissolving 7.0 parts of sodium hydroxide in 50 parts of ion-exchanged water to aqueous solution (B1) obtained by dissolving 10.0 parts of magnesium chloride in 200 parts of ion-exchanged water.

### (Example 8)

Binder (α), slurry composition, separator with a functional layer, positive electrode, negative electrode, and lithium-ion secondary battery were prepared or manufactured as in Example 1 except that in the preparation of the slurry composition, particulate polymer (C) as prepared below was used instead of particulate polymer (A). Various measurements and evaluations were made as in Example 1. The results are shown in Table 1.

### <Preparation of particulate polymer (C)>

Particulate polymer (C) was prepared by carrying out the same operation as in the preparation of particulate polymer (A) of Example 1, except that colloidal dispersion (C) containing magnesium hydroxide as a metal hydroxide was used instead of colloidal dispersion (A) containing magnesium hydroxide.

Colloidal dispersion (C) containing magnesium hydroxide was prepared by gradually adding under stirring aqueous solution (C2) obtained by dissolving 4.2 parts of sodium hydroxide in 50 parts of ion-exchanged water to aqueous solution (C1) obtained by dissolving 6.0 parts of magnesium chloride in 200 parts of ion-exchanged water.

### (Example 9)

Binder (α), slurry composition, separator with a functional layer, positive electrode, negative electrode, and lithium-ion secondary battery were prepared or manufactured as in Example 1 except that in the preparation of the slurry composition, particulate polymer (D) as prepared below was used instead of particulate polymer (A). Various measurements and evaluations were made as in Example 1. The results are shown in Table 1.

### <Preparation of particulate polymer (D)>

The same operation as in the preparation of particulate polymer (A) of Example 1 was carried out except that upon suspension polymerization the time for performing high shear stirring was changed from 1 minute to 10 seconds to give particulate polymer (D).

### (Example 10)

Binder (α), slurry composition, separator with a functional layer, positive electrode, negative electrode, and lithium-ion secondary battery were prepared or manufactured as in Example 1 except that in the preparation of the slurry composition, particulate polymer (E) as prepared below was used instead of particulate polymer (A). Various measurements and evaluations were made as in Example 1. The results are shown in Table 1.

### <Preparation of particulate polymer (E)>

Particulate polymer (A) prepared in Example 1 was subjected to fine and coarse powder cut treatment using a classifier (Alpine, Hosokawa Micron Corporation) to give particulate polymer (E).

### (Example 11)

Particulate polymer (A), binder (α), slurry composition, separator with a functional layer, positive electrode, negative electrode, and lithium-ion secondary battery were prepared or manufactured as in Example 1 except that in the preparation of the slurry composition the volume ratio of the inorganic particles (alumina) to particulate polymer (A) (inorganic particles/particulate polymer (A)) in the obtained slurry composition was changed from 70/30 to 80/20. Various measurements and evaluations were performed in the same manner as in Example 1. The results are shown in Table 1.

### (Example 12)

Particulate polymer (A), binder (α), slurry composition, separator with a functional layer, positive electrode, negative electrode, and lithium-ion secondary battery were prepared or manufactured as in Example 1 except that in the preparation of the slurry composition the volume ratio of the inorganic particles (alumina) to particulate polymer (A) (inorganic particles/particulate polymer (A)) in the obtained slurry composition was changed from 70/30 to 55/45. Various measurements and evaluations were performed in the same manner as in Example 1. The results are shown in Table 1.

### (Example 13)

Binder (α), slurry composition, separator with a functional layer, positive electrode, negative electrode, and lithium-ion secondary battery were prepared or manufactured as in Example 1 except that in the preparation of the slurry composition, particulate polymer (F) as prepared below was used instead of particulate polymer (A). Various measurements and evaluations were made as in Example 1 except that the melting point was measured for particulate polymer (F) rather than glass transition temperature. The results are shown in Table 1.

### <Preparation of particulate polymer (F)>

After the inside of a 1L autoclave equipped with a stirrer was fully purged with nitrogen, 400 g of deoxygenated pure water and 4 g of ammonium perfluorodecanate as an emulsifier and poval (polyvinyl alcohol) as a dispersion stabilizer were charged, and the temperature was raised to 60°C under stirring at 100 rpm. A mixed gas consisting of 90 parts by mass of vinylidene fluoride (VDF) and 10 parts by mass of hexafluoropropylene (HFP) was then charged until the internal pressure reached 3 MPa (gauge pressure) Thereafter, diisopropyl peroxydicarbonate as a polymerization initiator was added to initiate polymerization, and the reaction was continued for 3 hours. The reaction solution was cooled and stirring was stopped, and unreacted monomers were released to stop the reaction, whereby a latex of vinylidene fluoride-hexafluoropropylene copolymer (PVdF-HFP) was obtained as particulate polymer (F).

### (Example 14)

Binder (α), slurry composition, separator with a functional layer, positive electrode, negative electrode, and lithium-ion secondary battery were prepared or manufactured as in Example 1 except that in the preparation of the slurry composition, particulate polymer (G) as prepared below was used instead of particulate polymer (A). Various measurements and evaluations were made as in Example 1 except that the melting point was measured for particulate polymer (F) rather than glass transition temperature. The results are shown in Table 1.

### <Preparation of particulate polymer (G)>

The same procedure as in the preparation of particulate polymer (A) of Example 1 was carried out except that monomer composition (G) was used instead of monomer composition (A) to prepare particulate polymer (G).

Monomer composition (G) was prepared by mixing 20.9 parts of n-butylacrylate as a (meth)acrylic acid ester monomer, 20 parts of acrylonitrile as a nitrile group-containing monomer, 59 parts of methyl methacrylate as a (meth)acrylic acid ester monomer, and 0.1 parts of ethylene glycol dimethacrylate as a cross-linkable monomer.

### (Comparative Example 1)

Particulate polymer (A), binder (α), slurry composition, separator with a functional layer, positive electrode, negative electrode, and lithium-ion secondary battery were prepared or manufactured as in Example 1 except that in the manufacture of the separator with a functional layer, the value of the tension applied at the time of take-up was changed from 4 N/mm² to 25 N/mm². Various measurements and evaluations were performed in the same manner as in Example 1. The results are shown in Table 1.

### (Comparative Example 2)

Binder (α), slurry composition, separator with a functional layer, positive electrode, negative electrode, and lithium-ion secondary battery were prepared or manufactured as in Example 1 except that in the preparation of the slurry composition particulate polymer (H) prepared by seed polymerization as described below was used in place of particulate polymer (A) prepared by suspension polymerization, and that in the preparation of the separator with a functional layer, the slurry composition was applied onto the separator substrate by bar coating as described below instead of gravure coating. Various measurements and evaluations were performed in the same manner as in Example 1. The results are shown in Table 1.

### <Preparation of particulate polymer (H)>

To a 5 MPa pressure-resistant vessel with a stirrer, monomer composition (HI) containing 75 parts of styrene as an aromatic vinyl monomer, 20 parts of n-butyl acrylate as a (meth)acrylic acid alkyl ester monomer, 4 parts of methacrylic acid as an acid group-containing monomer, and 1 part of ethylene glycol dimethacrylate as a di(meth)acrylic acid ester monomer; 1.2 parts of sodium dodecylbenzenesulfonate as an emulsifier; 150 parts of ion-exchanged water; and 0.5 parts of potassium persulfate as a polymerization initiator were placed. The mixture was sufficiently stirred and warmed to 60°C to initiate polymerization.

When the polymerization conversion ratio reached 96%, the reaction was stopped by cooling to give an aqueous dispersion containing seed particles (Hₛ1).

To the aqueous dispersion containing seed particles (Hₛ1) was added monomer composition (H2) containing 75,000 parts of styrene as an aromatic vinyl monomer, 20,000 parts of n-butylacrylate as a (meth)acrylic acid ester monomer, 4,000 parts of methacrylic acid as an acid group-containing monomer, and 1,000 parts of ethylene glycol dimethacrylate as a di(meth)acrylic acid ester monomer. The mixture was sufficiently stirred and warmed to 60°C to initiate polymerization.

When the polymerization conversion ratio reached 96%, the reaction was stopped by cooling to give an aqueous dispersion containing seed particles (H).

### <Preparation of separator with functional layer (Bar coating)>

A microporous membrane made of polyethylene (thickness: 12 µm) was prepared as a separator substrate. Using a bar coater, the slurry composition obtained as described above was applied onto one side of the separator substrate. Next, the separator substrate on which the slurry composition had been applied was dried at 50°C for 1 minute to form a functional layer. The same operation was performed on the other side of the separator substrate. In this way a separator with a functional layer was obtained wherein a functional layer having a 2.0 µm-thick inorganic particle layer was formed on both sides of the separator substrate.

### (Comparative Example 3)

Binder (α), slurry composition, separator with a functional layer, positive electrode, negative electrode, and lithium-ion secondary battery were prepared or manufactured as in Example 1 except that in the preparation of the slurry composition, particulate polymer (I) as prepared below by emulsion polymerization was used instead of particulate polymer (A) prepared by suspension polymerization. Various measurements and evaluations were made as in Example 1. The results are shown in Table 1.

### <Preparation of particulate polymer (I)>

To a 5 MPa pressure-resistant vessel equipped with a stirrer, a monomer composition containing 77.9 parts of styrene as an aromatic vinyl monomer, 18 parts of 2-ethylhexylacrylate as a (meth)acrylic acid alkyl ester monomer, 4 parts of methacrylic acid as an acid group-containing monomer, and 0.1 parts of ethylene glycol dimethacrylate as a di(meth)acrylic acid ester monomer; 1.2 parts of sodium dodecylbenzenesulfonate as an emulsifier; 150 parts of ion-exchanged water; and 0.5 parts of potassium persulfate as a polymerization initiator were placed. The mixture was sufficiently stirred and warmed to 60°C to initiate polymerization. When the polymerization conversion ratio reached 99%, the reaction was stopped by cooling to give an aqueous dispersion containing particulate polymer (I).

The abbreviations given in Table 1 are as follows:
ST: styrene;
2EHA: 2-ethylhexyl acrylate;
EDMA: ethylene glycol dimethacrylate;
BA: n-butyl acrylate;
PVdF: vinylidene fluoride,
HFP: hexafluoropropylene,
AN: acrylonitrile;
MAA: methacrylic acid;
MMA: methyl methacrylate;
AGE: allyl glycidyl ether; and
AMA: allyl methacrylate.

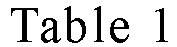

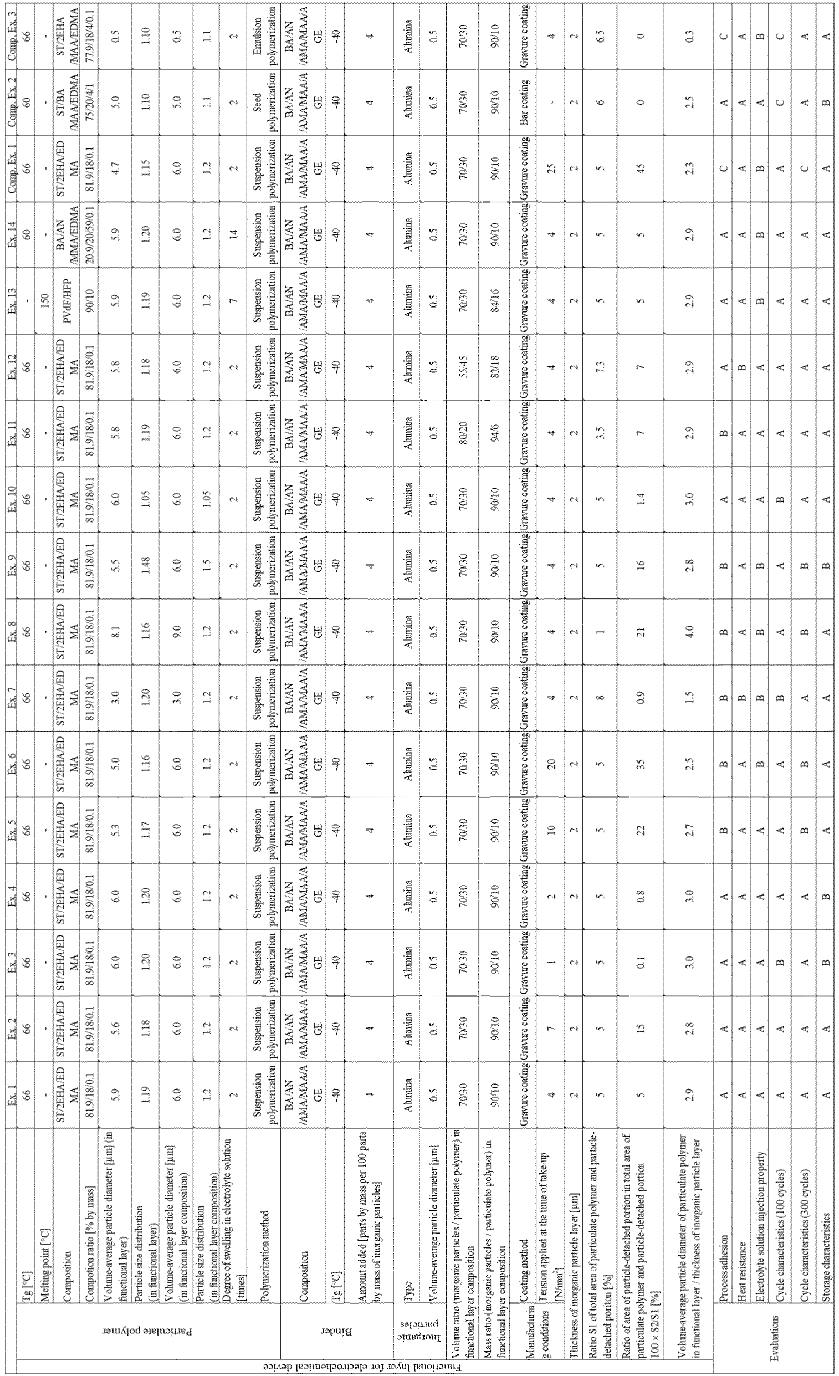

It can be seen from Table 1 that the functional layers of Examples 1 to 14 that comprise inorganic particles and a particulate polymer, wherein the functional layer has a particle-detached portion, the ratio of the area of the particle-detached portion in the total area of the particulate polymer and the particle-detached portion in a plan view falls within a predetermined range, and the volume-average particle diameter of the particulate polymer is larger than the thickness of an inorganic particle layer comprising the inorganic particles, has good process adhesion as well as allows an electrochemical device to exert good cycle characteristics.

On the other hand, it can be seen that the functional layer of Comparative Example 1, wherein the ratio of the area of the particle-detached portion in the total area of the particulate polymer and the particle-detached portion in a plan view falls outside a predetermined range, has poor process adhesion and fails to allow an electrochemical device to exert good cycle characteristics.

Further, it can be seen that, although the functional layer of Comparative Example 2 having no particle-detached portion has good process adhesion and also fails to allow an electrochemical device to exert good cycle characteristics.

Further, it can be seen that the functional layer of Comparative Example 3 having no particle-detached portion and having a volume-average particle diameter of the particulate polymer that is smaller than the thickness of the inorganic particle layer has poor process adhesion and also fails to allow an electrochemical device to exert good cycle characteristics.

### INDUSTRIAL APPLICABILITY

According to the present disclosure, it is possible to provide a functional layer for an electrochemical device which has good process adhesion as well as allows an electrochemical device to exert good cycle characteristics.

According to the present disclosure, it is also possible to provide a separator with a functional layer for an electrochemical device, which has good process adhesion as well as allows an electrochemical device to exert good cycle characteristics.

Further, according to the present disclosure, it is possible to provide an electrochemical device capable of exerting good cycle characteristics.

### REFERENCE SIGNS LIST

1 Functional layer
11 Inorganic particle
12 Particulate polymer
13 Inorganic particle layer
14 Particle-detached portion

## Claims

1. A functional layer for an electrochemical device, comprising inorganic particles and a particulate polymer,
wherein the functional layer has a particle-detached portion,
a ratio of an area of the particle-detached portion in a total area of the particulate polymer and the particle-detached portion in a plan view of a surface of the functional layer is 0.1% or more and 40.0% or less, and
a volume-average particle diameter of the particulate polymer is larger than a thickness of an inorganic particle layer comprising the inorganic particles.

2. The functional layer according to claim 1, wherein the particulate polymer has a volume-average particle diameter of 1.0 µm or more and 10.0 µm or less.

3. The functional layer according to claim 1 or 2, wherein the particulate polymer has a particle size distribution of 1.5 or less.

4. The functional layer according to any one of claims 1 to 3, wherein a ratio of the volume-average particle diameter of the particulate polymer to the thickness of the inorganic particle layer (volume-average particle diameter of the particulate polymer/thickness of the inorganic particle layer) is 1.1 or more and 10.0 or less.

5. The functional layer according to any one of claims 1 to 4, wherein the particulate polymer satisfies the following condition 1) or 2):
1) the particulate polymer has a glass transition temperature of 10°C or higher and 90°C or lower;
2) the particulate polymer has a melting point of 50°C or higher.

6. The functional layer according to any one of claims 1 to 5, wherein, a ratio of the total area of the particulate polymer and the particle-detached portion per unit area of the functional layer in a plan view of a surface of the functional layer is 10% or less.

7. The functional layer according to any one of claims 1 to 6, wherein the particulate polymer comprises an aromatic vinyl monomer unit.

8. The functional layer according to any one of claims 1 to 6, wherein the particulate polymer comprises a fluorine atom-containing monomer unit.

9. A separator with a functional layer for an electrochemical device, comprising the functional layer according to any one of claims 1 to 8 on a separator substrate.

10. An electrochemical device comprising the separator with a functional layer for an electrochemical device according to claim 9.

11. A method for manufacturing a functional layer for an electrochemical device, comprising:
forming on a substrate a coating of a composition for an electrochemical device functional layer comprising inorganic particles and a particulate polymer;
drying the coating to form a pre-functional layer; and
applying a tension of 1 N/mm² or more and 20 N/mm² or less to the substrate on which the pre-functional layer is formed.

12. The method according to claim 11, wherein the particulate polymer has a volume-average particle diameter of 1.0 µm or more and 10.0 µm or less.

13. The method according to claim 11 or 12, wherein the particulate polymer has a particle size distribution of 1.5 or less.

14. The method according to any one of claims 11 to 13, wherein the particulate polymer satisfies the following condition 3) or 4):
3) the particulate polymer has a glass transition temperature of 10°C or higher and 90°C or lower;
4) the particulate polymer has a melting point of 50°C or higher.

15. The method for manufacturing a functional layer for an electrochemical device according to any one of claims 11 to 14, wherein a volume ratio of the inorganic particles to the particulate polymer (inorganic particles/particulate polymer) in the composition is 55/45 or more and 95/5 or less.

16. The method according to any one of claims 11 to 15, wherein the particulate polymer comprises an aromatic vinyl monomer unit.

17. The method according to any one of claims 11 to 15, wherein the particulate polymer comprises a fluorine atom-containing monomer unit.

18. A method for manufacturing a separator with a functional layer for an electrochemical device, wherein a functional layer for an electrochemical device is formed on a separator substrate using the method for manufacturing a functional layer for an electrochemical device according to any one of claims 11 to 17.

19. A method for manufacturing an electrochemical device, wherein a separator with a functional layer for an electrochemical device as obtained by the method for manufacturing a separator with a functional layer for an electrochemical device according to claim 18 is used.
